(19) Europäisches Patentamt
European Patent Office
Office européen des brevets

(11) Numéro de publication : **0 334 771 B1**

# (12) FASCICULE DE BREVET EUROPEEN

(45) Date de publication du fascicule du brevet : **11.11.92 Bulletin 92/46**

(21) Numéro de dépôt : **89420079.9**

(22) Date de dépôt : **28.02.89**

(51) Int. Cl.$^5$ : **C08G 73/12,** C08F 222/40, C08F 222/20, C08F 283/00, C08J 5/24, B29C 53/56, // (C08F222/40, 226:10)

(54) **Polymères à groupements imides faits à partir de diamines encombrées et leurs procédés de préparation.**

(30) Priorité : **03.03.88 FR 8802986**

(43) Date de publication de la demande : **27.09.89 Bulletin 89/39**

(45) Mention de la délivrance du brevet : **11.11.92 Bulletin 92/46**

(84) Etats contractants désignés : **AT BE CH DE ES FR GB IT LI LU NL SE**

(56) Documents cités :
**EP-A- 0 296 994**
**FR-A- 2 094 607**
**FR-A- 2 427 346**
**FR-A- 2 589 869**

(73) Titulaire : **CIBA-GEIGY AG**
**Klybeckstrasse 141**
**CH-4002 Basel (CH)**

(72) Inventeur : **Camberlin, Yves**
**68 bis, quai Clémenceau**
**F-69300 Caluire (FR)**

**EP 0 334 771 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

Dans la demande française FR-A-2.608.613 déposée par la Demanderesse, on a décrit et revendiqué des polymères à groupements imides qui comprennent le produit de réaction, à une température allant de 50°C à 300°C, entre au moins :

- (a) un N,N'-bis-imide ou une association de plusieurs bis-imides de formule :

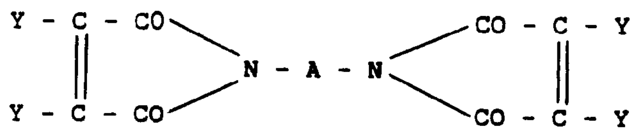

(I)

dans laquelle :

. les symboles Y, identiques ou différents, représentent chacun H, $CH_3$ ou Cl ;

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

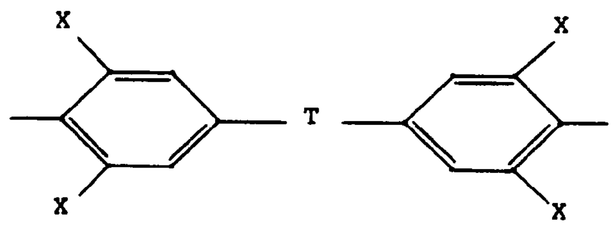

dans laquelle T représente un lien valentiel simple ou un groupement :

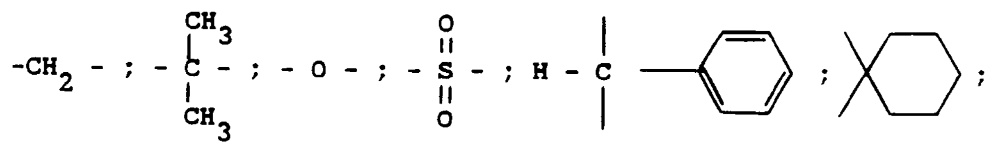

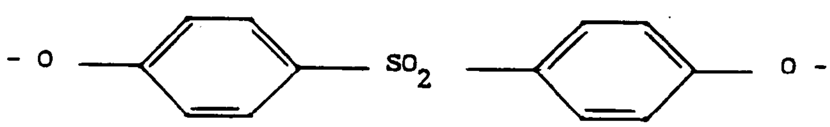

et les symboles X, identiques ou différents, représentent chacun un atome d'hydogène, un radical méthyle, éthyle, propyle ou isopropyle ; et

- (b) une ou plusieurs diamine(s) biprimaire(s) encombrée(s) prise(s) dans le groupes formé par :

(i) les espéces répondant à la formule générale :

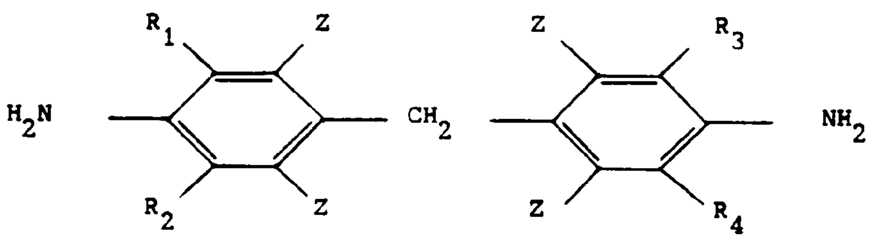

(II)

dans laquelle :

. les symboles $R_1$, $R_2$, $R_3$ et $R_4$, identiques ou différents, représentent chacun un radical méthyle, éthyle, propyle ou isopropyle ;

. les symboles Z, identiques ou différents, représentent chacun un atome d'hydrogène ou un atome de chlore ;

(2i) et les espèces répondant à la formule générale :

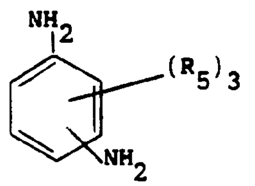

(III)

dans laquelle :

. les radicaux amino sont en position méta ou para, l'un par rapport à l'autre ;

. les symboles $R_5$, identiques ou différents, représentant chacun un radical méthyle, éthyle, propyle ou isopropyle.

L'encombrement stérique des diamines (b) conduit à une faible réactivité des constituants du milieu de polymérisation, ce qui permet d'atteindre la gélification des prépolymères et le durcissement complet des résines au bout de durées plus longues que celles observées avec les polyaminobismaléimides issus de diamines non encombrées. Cette réactivité plus faible des constituants du milieu de polymérisation selon la présente invention peut présenter un intérêt particulier d'une part pour la réalisation de pièces moulées par simple coulée des prépolymères, d'autre part pour la réalisation de pièces selon la technique de l'enroulement filamentaire et enfin pour la réalisation d'articles intermédiaires préimprégnés en utilisant la technique de l'imprégnation de matériaux fibreux à l'aide des prépolymères à l'état fondu (technique dite hot melt).

Par ailleurs, les polyaminobismaléimides conformes à la demande française précitée sont préparés sans prendre des précautions particulières sur le plan de l'hygiène étant donné que les diamines encombrées (b) employées ne présentent pas les risques de toxicité qui sont attachés en général aux diamines biprimaires aromatiques non encombrées.

La demande française précitée prévoit encore que les polymères peuvent être préparés en ajoutant dans le milieu de réaction, à côté des réactifs (a) et (b), le (ou les) réactif(s) factultatif(s) (c) et/ou (d), (c) consistant dans un ou plusieurs monomère(s) autre(s) qu'un bis-imide de formule (I) et comportant une ou plusieurs double(s) liaison(s) carbone-carbone polymérisable(s), (d) consistant dans un composé imidazole. L'ajout du réactif (c) est opéré quand on a besoin de modifier certaines caractéristiques rhéologiques et/ou propriétés mécaniques des polymères, tandis que l'ajout du réactif (d) est opéré quand on a besoin d'augmenter la réactivité des constituants (a), (b) et éventuellement (c) du milieu de polymérisation.

Poursuivant des travaux dans le domaine de la conception de polyaminobismaléimides utilisables plus particulièrement pour l'obtention d'articles réalisés selon la techniques de l'enroulement filamentaire et d'articles préimprégnés sans solvant, la Demanderesse a mis au point des prépolymères polyaminobismaléimides thermodurcissables dont la préparation est faite sans prendre de précautions particulières sur le plan de l'hygiène et qui présentent des viscosités dont la valeur et l'évolution au cours du temps sont parfaitement adaptées aux types de transformation correspondant à l'enroulement filamentaire et à l'imprégnation hot-melt.

Il a maintenant été trouvé, et c'est ce qui constitue l'objet de la présente invention, que de pareils prépolymères peuvent être obtenus en faisant réagir les réactifs (a) et (b) conformes à la demande française précitée avec un réactif (c) approprié et/ou un réactif (d) en présence d'un réactif supplémentaire (e) de type acrylate.

Plus précisément, la présente invention concerne des prépolymères thermodurcissables à groupements imides, présentant une viscosité à l'état fondu mesurée dans les conditions définies ci-après entre 0,1 Pa.s et 500 Pa.s, qui comprennent le produit de réaction, à une température allant de 50°C à 180°C, entre :

- (a) un ou plusieurs bis-maléimide(s) répondant à la formule (I) et aux définitions données ci-avant à propos de cette formule,
- (b) une ou plusieurs diamine(s) encombrée(s) répondant aux formules (II) et (III) et aux définitions données ci-avant à propos de ces formules ; lesdits prépolymères à groupes imides étant caractérisés en ce que le milieu de réaction qui sert à les préparer contient en outre :
- un (ou des) réactif(s) (c) et/ou (d), (c) consistant dans un ou plusieurs hétérocycle(s) substitué(s) pris dans le groupe formé par : les vinylpyridines, la N-vinylpyrrolidone-2, l'isocyanurate d'allyle, le vinyltétrahydrofuranne, (d) consistant dans un composé imidazole,
- et un réactif acrylate (e) consistant dans un ou plusieurs composé(s) de formule générale :

$$(CH_2 = CR_6 - CO - O \frac{)}{n} B \qquad (IV)$$

dans laquelle :

. le symbole $R_6$ représente un atome d'hydrogène ou un radical méthyle ;

. n représente un nombre entier ou fractionnaire au moins égal à 1 et au plus égal à 8 ;

. le symbole B représente un radical organique de valence n dérivé : d'un reste aliphatique saturé, linéaire ou ramifié, ayant de 1 à 30 atomes de carbone et pouvant renfermer un ou plusieurs pont(s) oxygène et/ou une ou plusieurs fonction(s) hydroxyle(s) libre(s) ; d'un reste aromatique (de type arylique ou arylaliphatique) ayant de 6 à 150 atomes de carbone constitué par un noyau benzénique, pouvant être substitué par un à trois radicaux alkyles ayant de 1 à 5 atomes de carbone, ou par plusieurs noyaux benzéniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa structure un ou plusieurs pont(s) oxygène et/ou une ou plusieurs fonction(s) hydroxyle(s) libre(s), le (ou les) valence(s) libre(s) du radical B aromatique pouvant être portée(s) par un atome de carbone d'une chaîne aliphatique et/ou par un atome de carbone d'un noyau benzénique.

A titre d'exemples spécifiques de bis-imides (a) de formule(I), on peut citer en particulier les composés indiqués dans la demande française FR-A-2.608.613, c'est-à-dire :

- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide.

Ces bis-maléimides peuvent être préparés selon les procédés décrits dans le brevet américain US-A-3.018.290 et le brevet anglais GB-A-1.137.290. On utilise de préférence, pour la mise en oeuvre de la présente invention, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide et/ou le N,N'-méthyl-5 phénylène-1,3-bis-maléimide.

A titre d'exemples spécifiques de diamines encombrées (b) de formules (II) et (III), on peut citer en particulier, comme indiqué dans la demande française précitée :

- le diamino-4,4' tétraméthyl-3,3',5,5' diphénylméthane,
- le diamino-4,4' tétraéthyl-3,3',5,5' diphénylméthane,
- le diamino-4,4'diméthyl-3,5 diéthyl-3',5' diphénylméthane,
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le diamino-4,4' dichloro-2,2' tétraéthyl-3,3',5,5' diphénylméthane,
- le diamino-1,3 diéthyl-2,4 méthyl-6 benzène,
- le diamino-1,3 méthyl-2 diéthyl-4,6 benzène,
- et leurs mélanges.

Ces diamines encombrées peuvent être préparées selon les procédés décrits dans le brevet anglais GB-A-852.651 et le brevet américain US-A-3.481.900. On utilise de préférence, pour la mise en oeuvre de la présente invention, le diamino-4,4' tétraéthyl-3,3',5,5' diphénylméthane, le diamino-4,4' diéthyl-3,3' diméthyl-5,5' diphénylméthane et leurs mélanges.

Les quantités de N'N-bis-imide(s) (a) et de diamine(s) encombrée(s) (b) sont choisies de façon à ce que le rapport r :

$$\frac{\text{nombre de moles de bis – imide(s) (a)}}{\text{nombre de moles de diamine(s) (b)}}$$

se situe dans l'intervalle allant de 1,1/l à 20/l et, de préférence, allant de 2/l à 5/l.

Le réactif (c), dont l'emploi est soit obligatoire en absence du composé imidazole (d), soit facultatif en présence de (d), est utilisé en quantitiés représentant généralement moins de 60 % et, de préférence, de 2 à 20 % du poids total des réactifs (a) + (b).

Le composé imidazole (d), dont l'emploi est soit obligatoire en absence du réactif (c), soit facultatif en présence de (c), répond à la formule générale indiquée dans le demande française FR-A-2.608.613, c'est-à-dire :

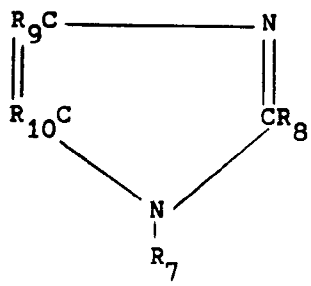

(V)

dans laquelle $R_7$,$R_8$,$R_9$ et $R_{10}$, identiques ou différents, représentent chacun : un atome d'hydrogène, un radical alkyle ou alcoxy ayant de 1 à 20 atomes de carbone, vinyle, phényle, nitro, $R_9$ pouvant former avec $R_{10}$ et les atomes de carbone auxquels sont liés ces radicaux un cycle unique comme par exemple un cycle benzénique, $R_7$ pouvant également représenter un groupement carboxyle lié à un deuxième cycle imidazole.

Comme exemples spécifiques de composés imidazole (d), on peut citer en particulier : l'imidazole ou glyoxaline, le méthyl-1 imidazole, le méthyl-2 imidazole, le diméthyl-1,2 imidazole, le vinyl-1 imidazole, le vinyl-1 méthyl-2 imidazole, le benzimidazole, le carboxyldiimidazole.

Le composé imidazole, quand il est utilisé, est employé en quantités cataltyiques. Selon la nature du composé imidazole et selon la vitesse de polymérisation souhaitée au stade de la mise en oeuvre, on utilise le composé imidazole à un taux se situant dans l'intervalle allant de 0,01 à 1% en poids par rapport à l'ensemble des réactifs (a) + (b) + éventuellement (c) et, de préférence, allant de 0,02 à 0,5 %.

A titre de réactif acrylate (e) qui convient, on peut citer :

(e1) les mono(méth)acrylates correspondant à la formule (IV) dans laquelle :

. n = 1, et

. B représente un radical organique monovalent de formule :

$$-(CH_2\ CH_2O)_m-B_1 \qquad (VI)$$

dans laquelle : $B_1$ représente un radical alkyle, linéaire ou ramifié, ayant de 1 à 6 atomes de carbone ou un radical phényle ; et m est un nombre entier égal à zéro, 1, 2, 3, 4 ou 5;

(e2) les di(méth)acrylates correspondant à la formule (IV) dans laquelle :

. n = 2, et

. B représente un radical organique divalent de formule :

$$-(CH_2\ CH_2O)_p-B_2-(OCH_2\ CH_2)_q- \qquad (VII)$$

dans laquelle : $B_2$ représente un radical divalent alkylène, linéaire ou ramifié, ayant de 2 à 9 atomes de carbone et pouvant renfermer un ou plusieurs pont(s) oxygène ou un radical de formule

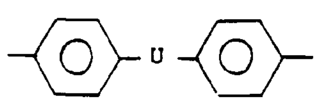

dans laquelle le symbole U représente un lien valentiel simple ou un groupement :

$-CH_2-$, $-CH_2-CH_2-$, $-CH(CH_3)CH_2-$,

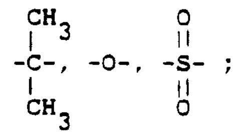

les symboles p et q, identiques ou différents, représentent chacun un nombre entier égale à zéro, 1, 2, 3, 4 ou 5 ;

(e3) les tri- et tétra(méth)acrylates correspondant à la formule (IV) dans laquelle :

. n = 3 ou 4, et

. B représente un radical organique trivalent ou tétravalent dérivé d'un reste aliphatique saturé, linéaire ou ramifié, ayant de 3 à 20 atomes de carbone et pouvant renfermer un ou plusieurs pont(s) oxygène et/ou une ou plusieurs fonction(s) hydroxyle(s) libre(s) ;

(e4) les (méth)acrylates d'époxy novolaques qui, tout en correspondant à la formule (IV), sont représentés ici par la formule suivante :

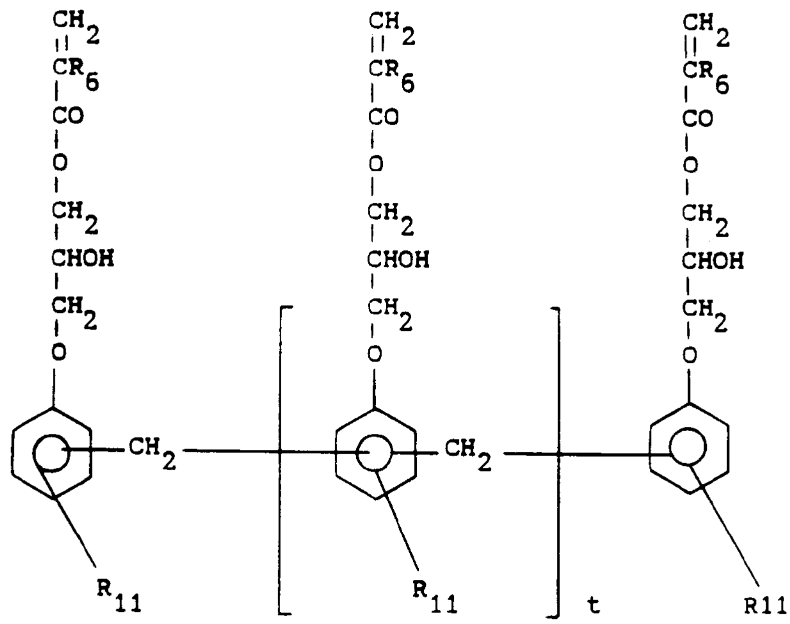

(VIII)

dans laquelle :

. le symbole $R_6$ a la signification donnée ci-avant à propos de la formule (IV) ;

. le symbole $R_{11}$ représente un atome d'hydrogène ou un radical méthyle ;

. t est un nombre entier ou fractionnaire se situant dans l'intervalle allant de 0,1 à 7 ;

(e5) des mélanges de plusieurs acrylates et/ou méthacrylates d'un même type [(e1), (e2), (e3) ou (e4)] entre eux ou des mélanges d'un ou plusieurs acrylate(s) et/ou méthacrylate(s) d'un même type avec un ou plusieurs acrylate(s) et/ou méthacrylate(s) d'un autre type.

A titre d'exemples spécifiques de réactif acrylate (e1) qui conviennent bien, on peut citer en particulier : les mono(méth)acrylates de méthyle ; les mono(méth)acrylates de phénol(mono-oxyéthylé) ; les mono(méth)acrylates de phénol (di-oxyéthylé).

A titre d'exemples spécifiques de réactif acrylate (e2) qui conviennent bien, on peut citer : les di(méth)acrylates d'éthylèneglycol ; les di(méth)acrylates de butanediol-1,4 ; les di(méth)acrylates d'hexanediaol-1,6 ; les di(méth)acrylates de tripropylèneglycol ; les di(méth)acrylates des diphénols, di (mono- ou poly-oxyéthylés) ou non, suivants : le dihydroxy-4,4'-diphénylméthane, le bisphénol A, le dihydroxy-4,4'-diphényléther et en particulier les di(méth)acrylates de bisphénol A di(mono-oxyéthylé) ou les di(méh)acrylates de bisphénol A di (di-oxyéthylé) [cf. formule (VII) dans laquelle $B_2$ représente le radical :

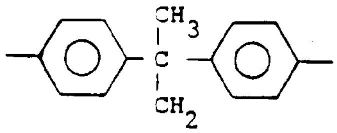

et p = q = 1 ou 2].

A titre d'exemples spécifiques de réactif acrylate (e3) qui conviennent bien, on peut citer en particulier : les tri(méth)acrylates de butanetriol-1,2,4 ; les tri(méth)acrylates d'hexanetriol-1,2,6 ; les tri(méth)acrylates de triméthylolpropane ; les tri(méth)acrylates de pentaérythritol ; les tétra(méth)acrylates de pentaérythritol.

Les (méth)acrylates d'époxy novolaques (e4) sont des produits connus dont certains sont disponibles dans le commerce. Ils peuvent être préparés en faisant réagir les acides (méth)acryliques avec une résine époxy de type novolaque, cette dernière étant le produit de réaction d'épichlorhydrine et de polycondensats phéno/formol dans la formule (VIII) donnée ci-avant $R_{11}$ est alors une atome d'hydrogène ou de polycondensats crésol/formol dans la formule $R_{11}$ est alors un radical méthyle. Ces polyacrylates oligomères (e4) et un procédé pour les préparer se trouvent décrits par exemple dans le brevet américain US-A-3.535.403.

A titre d'exemples spécifiques de réactif acrylate (e4) qui conviennent bien, on peut citer en particulier les acrylates d'époxy novolaques de formule (VIII) dans laquelle $R_6$ et $R_{11}$ représentent un atome d'hydrogène et t est un nombre entier ou fractionnaire se situant dans l'intervalle allant de 0,1 à 5.

A titre d'exemples spécifiques de réactif acrylate (e5) qui conviennent bien, on peut citer les mélanges des (méth)acrylates d'époxy novolaques (e4) avec au plus 30 % en poids, par rapport au poids du mélange (e4) + (e3), d'un triacrylate et/ou d'un triméthacrylate répondant aux définitions données ci-avant à propos du réactif acrylate (e3) et en particulier les mélanges des acrylates d'époxy novolaques convenant bien, juste cités ci-avant, avec au plus 25 % en poids, par rapport au poids du mélange, d'un triacrylate et/ou d'un triméthacrylate convenant bien choisi parmi ceux juste cités ci-avant.

Le réactif acrylate (e) qui est utilisé de manière très préférentielle est pris dans le groupe formé par : les di(méth)acrylates de bisphénol A di(mono-oxyéthylé) ; les di(méth)acrylates de bisphénol A di(di-oxyéthylé) ; les acrylates d'époxy novolaques de formule (VIII) dans laquelle $R_6$ et $R_{11}$ représentent un atome d'hydrogène et t est un nombre entier ou fractionnaire se situant dans l'intervalle allant de 0,1 à 5, ces composés étant pris seuls ou en mélange avec au plus 25 % en poids, par rapport au poids du mélange, de triacrylate de triméthylolpropane.

Le réactif acrylate (e), formé d'un ou plusieurs composé(s) de formule (IV), est utilisé en quantités représentant généralement de 1 % à 60 % et, de préférence, de 5 % à 30 % du poids total des réactifs (a) + (b) + (e) + éventuellement (c).

Divers adjuvants peuvent être incorporés dans les prépolymères selon l'invention. Ces adjuvants habituellement utilisés et bien connus de l'homme de l'art peuvent être par exemple des stabilisants ou des inhibiteurs de dégradation, des lubrifiants ou des agents de démoulage, des colorants ou des pigments, des charges pulvérulentes ou en particules comme des silicates, des carbonates, le kaolin, la craie, le quartz pulvérisé, le mica ou des microbilles de verre. On peut aussi incorporer des adjuvants modifiant la structure physique du produit obtenu comme par exemple des agents porogènes ou des agents de renforcement fibreux tels que notamment fibrilles de carbone, de polyimide, de polyamides aromatiques, des whiskers.

Le procédé de fabrication est tel que le prépolymère prêt à l'emploi présente suffisamment de souplesse et de collant en couche mince.

Tout d'abord, on réalise un mélange intime du (ou des) bis-maléimide(s) (a) et du réactif aminé (b). Pour éviter une homopolymérisation prématurée des maléimides qui conduirait à une résine trop visqueuse, le mélange (a) + (b) est fondu, en absence du composé imidazole (d) éventuel, en opérant sous agitation et à une température au plus égale à la température de fusion du maléimide le plus difficile à liquéfier et généralement comprise entre 50°C et 180°C (étape 1).

Puis on ajoute dans le mélange fondu qui est agité et maintenu à une température, identique ou différente de celle mise en oeuvre dans l'étape précédente, comprise entre 50°C et 180°C, le (ou les) réactif(s) (c) et/ou (d) et on laisse le milieu réactionnel réagir sous agitation pendant une durée allant de 1 minute à 20 minutes (étape 2).

Au bout de ce temps, on introduit rapidement dans le milieu réactionnel, toujours sous agitation et maintenu à la température de l'étape précédente d'addition du (ou des) réactif(s) (c) et/ou (d), le réactif (e) et, une fois ce réactif introduit, on coule immédiatement le prépolymère formé à l'extérieur du réacteur ayant servi à la préparer (étape 3).

La viscosité à l'état fondu des prépolymères ainsi obtenus peut être aisément ajustée à la valeur souhaitée, comprise entre 0,1 Pa.s et 500 Pa.s, en jouant notamment sur la nature et les proportions respectives des réactifs mis en oeuvre ainsi que sur la température et la durée des différentes étapes du procédé de fabrication dont on vient de parler. A noter que la nature et les proportions du (ou des) réactif(s) (c) et/ou (d) présente une influence prépondérante sur le réglage de la viscosité.

Les opérations qui viennent d'être décrites peuvent être effectuées non seulement en masse, mais encore en présence de quantités variables d'un liquide polaire tel que par exemple : crésol, diméthylformamide, N-méthylpyrrolidone, diméthylacétamide, méthyléthylcétone, dioxanne, cyclohexanone.

A l'état de liquide homogène, les prépolymères selon l'invention peuvent être utilisés directement par exemple pour l'imprégnation de conducteurs ou pour faire des moulages par simple coulée à chaud. On peut aussi, après refroidissement et broyage, employer ces prépolymères à l'état de poudres par exemple pour l'obtention d'objets moulés par compression, éventuellement en association avec des charges fibreuses ou pulvérulentes. Les prépolymères peuvent également être utilisés en solution pour la préparation de revêtements, de collages, de matériaux stratifiés dont le squelette peut être sous forme de nappes tissées ou non tissées, d'éléments unidirectionnels ou de fibres coupées naturelles ou synthétiques tels que par exemple les filaments ou fibres de verre, de bore, de carbone, de tungstène, de silicium, de polyamide-imide ou de polyamide aromatique.

Les prépolymères selon la présente invention présentent un intérêt tout particulier pour l'obtention d'articles intermédiaires préimprégnés sans solvant. L'imprégnation du matériau fibreux peut être effectuée par application des techniques usuelles telles que l'immersion, l'enduction au racle ou au rideau ou l'imprégnation par transfert. Le film transférable et les articles préimprégnés peuvent être utilisés directement ou bien être emmagasinés en vue d'un emploi ultérieur ; ils conservent remarquablement leurs propriétés au cours d'un stockage au froid entre 0 et 10°C. Les prépolymères utilisés pour cette application présentent de préférence une viscosité à l'état fondu comprise entre 4 Pa.s et 50 Pa.s.

Les matériaux préimprégnés sont utilisables pour la réalisation de pièces ayant des formes et des fonctions variées dans de nombreuses industries comme par exemple dans l'aéronautique. Ces pièces qui peuvent être des pièces de révolution sont obtenues par placage de plusieurs couches de préimprégnés sur une forme ou un support.

On effectue ensuite la réticulation dans les conditions technologiques habituelles relatives aux matériaux composites et en particulier à des températures comprises entre 100 et 300°C.

On peut utiliser aussi les préimprégnés comme renforts ou moyens de réparation de pièces détériorées.

Mais il est aussi possible de concevoir des pièces selon la technique de l'enroulement filamentaire avec ou sans support, destinée à la réalisation de pièces de révolution, technique utilisée notamment pour faire des pièces relevant des industries automobile et aéronautique. Les prépolymères mis en oeuvre dans cette technique présentent de préférence une viscosité à l'état fondu comprise entre 0,1 Pa.s et 2 Pa.s.

Les exemples qui suivent illustrent de manière non limitative comment la présente invention peut être mise en pratique.

Dans ces exemples, un certain nombre de contrôles sont effectués. De même, diverses propriétés sont mesurées. On indique ci-après les modes opératoires et/ou les normes selon lesquelles ces contrôles et mesures sont effectués.

- <u>VISCOSITE A L'ETAT FONDU DU PREPOLYMERE</u> :

La viscosité à l'état fondu dont on parle dans le présent mémoire est la viscosité dynamique du prépolymère obtenu au moment de la coulée en fin du procédé de préparation conduit en masse ; elle est mesurée à 80°C +/- 0,1°C avec un viscosimètre RHEOMAT 30 de la Société CONTRAVES équipé d'un mobile tournant sous un gradiant de 13 $s^{-1}$ ; sa valeur est donnée en Pa.s.

- <u>POINT DE RAMOLLISSEMENT DU PREPOLYMERE</u> :

On appelle point de ramollissement, la température approximative à laquelle une baguette de verre de 6 mm de diamètre peut s'enfoncer facilement de quelques mm dans le prépolymère.

- <u>TEMPERATURE DE TRANSITION VITREUSE DU POLYMERE DURCI</u> :

La température de transition vitreuse (Tg) correspond à la chute brutale du module d'élasticité en fonction de la température. Elle peut être déterminée sur le graphique représentant les variations du module d'élasticité en fonction de la température, variations mesurées par analyse mécanique dynamique, à l'aide d'un appareil DMA DUPONT modèle 982, à une vitesse de montée en température de 3°C/min. Les éprouvettes sont conditionnées à EHO (Etat Hygrométrique Zéro) c'est-à-dire qu'elles sont placées en dessicateur sur silicagel et séchées 24 heures à température ambiante sous 0,66 - 1,33.$10^2$ Pa avant de réaliser les mesures.

- CARACTERISTIQUES MECANIQUES EN FLEXION DU POLYMERE DURCI :

La détermination du module en flexion (Mf) et de la résistance à la rupture (Rf) est faite sur des éprouvettes de type barreau conditionnées à EHO, selon la norme ASTM D 790 M. Les résultats sont donnés en MPa.

- CARACTERISTIQUES MECANIQUES EN TRACTION DU POLYMERE DURCI :

Elles sont déterminées sur des éprouvettes de type haltère, conditionnées à EHO, selon la norme ASTM D 638 M.

- RESISTANCE AU CHOC CHARPY DU POLYMERE DURCI :

Elle est déterminée à 20°C sur des éprouvettes de type barreau de 80 x 10 x 4 mm ne comportant pas d'entaille, conditionnées à EHO, selon la norme ASTM D 256. Les résultats sont donnés en $kJ/m^2$.

EXEMPLE 1 :

Dans un réacteur en verre muni d'un agitateur de type ancre, on introduit à température ambiante :
- 80 g (0,223 mole) de N,N′-4,4′-diphénylméthane-bis-maléimide, et
- 20 g (0,064 mole) de diamino-4,4′ tétraéthyl-3,3′,5,5′ diphénylméthane (le rapport r est égal à 3,48/1).

Etape 1 : on plonge le réacteur dans un bain d'huile préchauffée à 160°C et le mélange est agité jusqu'à fusion complète des ingrédients engagés et obtention d'une masse homogène. La durée de cette étape est de 5 minutes.

Etape 2 : le mélange fondu obtenu est refroidi jusqu'à 140°C et on introduit 8 g de N-vinylpyrrolidone-2, puis on laisse réagir l'ensemble sous agitation pendant 8 minutes.

Etape 3 : on ajoute ensuite dans la masse réactionnelle, toujours sous agitation et maintenue à 140°C, 28 g de diacrylate de bisphénol A di(di-oxyéthylé), ce composé étant disponible dans le commerce sous la marque déposée EBECRYL 150 de la Société UCB, et on coule immédiatement la masse réactionnelle dans un moule préchauffé à 150°C.

Le prépolymère ainsi obtenu est souple et collant à températrue ambiante (20°C). Il présente un point de ramollissement voisin de 5°C. Sa viscosité à 80°C est de 5 Pa.s

Avec ce prépolymère, l'imprégnation de type HOT-MELT (avec prépolymère fondu sans solvent) de matériaux fibreux, à base par exemple de nappes tissées de fibres de carbone, pour faire des articles intermédiaires préimprégnés, est possible dans la gamme de température allant de 80 à 100°C.

En coulant immédiatement le prépolymère dans un moule comme indiqué ci-avant, on peut préparer des plaques de dimensions 140 x 100 x 4 mm qui vont subir le cycle de cuisson suivant :
. 100 minutes entre 150°C et 250°C,
. 16 heures à 250°C,
. et 2 heures entre 250°C et 25°C.

Après démoulage, les plaques à base de polymère durci sont découpées pour obtenir des éprouvettes de dimensions appropriées sur lesquelles on mesure : la température de transition vitreuse (Tg), le module en flexion (Mf), la résistance à la rupture en flexion (Rf), la résistance au choc CHARPY non entaillée (Rc), l'allongement à la rupture en traction (At).

Les valeurs trouvées sont les suivantes :

- Tg : 280°C,
- Mf : . à 20°C : 3500 MPa,
  . à 250°C : 1700 MPa,
- Rf : . à 20°C : 130 MPa,
  . à 250°C : 60 MPa,
- Rc : . à 20°C : 12 $Kj/m^2$,
- At : . à 20°C : 2,4 %.

A titre d'essai comparatif, on a reproduit les opérations décrites ci-avant, mais en n'utilisant pas de réactif

acrylate. Le prépolymère obtenu dans ces conditions présente un point de ramollissement de 60°C et une viscosité à 80°C qui est de l'ordre de 2000 Pa.s, ce qui rend son utilisation impossible pour réaliser des articles intermédiaires préimprégnés sans solvant (le prépolymère est trop visqueux et l'imprégnation des fibres entraîne une déformation importante de la nappe qui constitue un obstacle au développement de cette application).

EXEMPLE 2

On reproduit l'exemple 1 en mettant en oeuvre les réactifs suivants :

- étape 1 : 82 g (0,229 mole) de N,N'-4,4'(diphénylméthane-bis-maléimide et 18 g (0,064 mole) de diamino-4,4' diéthyl-3,3' diméthyl-5,5' diphénylméthane (le rapport est égal à 3,58/1) ;
- étpae 2 : 8 g de N-vinylpyrrolidone-2, et
- étape 3 : 28 g du réactif acrylate consistant dans le mélange à base de 80 % en poids d'un diacrylate d'époxy novolaque de formule (VIII) dans laquelle $R_6 = R_{11} = H$ et t est un nombre compris entre 2 et 4 et 20 % en poids de triacrylate de triméthylolpropane ; ce réactif est disponible dans le commerce sous la marque déposée EBECRYL 629 de la Société UCB.

le prépolymère obtenu est souple et collant à température ambiante. Il présente un point de ramollissement voisin de 10°C. Sa viscosité à 80°C est de 10 Pa.s. Avec ce prépolymère, l'imprégnation de type HOT-MELT de matériaux fibreux est possible entre 80°C et 120°C.

Les propriétés physico-mécaniques du polymère moulé, durci et testé comme indiqué à l'exemple 1 sont les suivantes :

- Tg : 295°C,
- Mf : . à 20°C : 3800 MPa,
  . à 250°C : 2000 MPa,
- Rf : . à 20°C : 140 MPa,
  . à 250°C : 60 MPa,
- Rc : . à 20°C : 10 $kJ/m^2$,
- At : . à 20°C : 2 %.

En absence du réactif acrylate, le prépolymère obtenu présente un point de ramollissement de 60°C et une viscosité à 80°C qui est de l'ordre de 2000 Pa.s, ce qui rend son utilisation impossible pour réaliser des articles intermédiaires préimprégnés sans solvant.

EXEMPLE 3

On reproduit à nouveau l'exemple 1 en mettant en oeuvre les réactifs suivants :

- étape 1 : 82 g (0,229 mole) de N,N'-4,4'-diphénylméthane-bis-maléimide et 18 g (0,064 mole) de diamino-4,4' diéthyl-3,3' diméthyl-5,5' diphénylméthane (le rapport r est égal à 3,58/1) ;
- étape 2 : 5 g de N-vinylpyrrolidone-2 et 0,025 g d'imidazole ; on laisse ici réagir l'ensemble des constituants sous agitation pendant 6 minutes ;
- étape 3 : 28 g du réactif acrylate déjà utilisé dans l'exemple 2 précédent.

Le prépolymère obtenu est souple et collant à température ambiante. Il présente un point de ramollissement voisin de 15°C. Sa viscosité à 80°C est de 12 Pa.s et l'imprégnation de type HOT-MELT est possible entre 80°C et 120°C.

les propriétés physico-mécaniques du polymère moulé, durci et testé comme indiqué à l'exemple 1 sont les suivantes :

- Tg : 305°C,
- Mf : . à 20°C : 3800 MPa,
  . à 250°C : 2000 MPa,
- Rf : . à 20°C : 130 MPa,
  . à 250°C : 80 MPa,
- Rc : . à 20°C : 10 $kJ/m^2$
- At : . à 20°C : 1,8 %.

En absence du réactif acrylate, le prépolymère obtenu présente un point de ramollissement de 60°C et une viscosité à 80°C qui est toujours de l'ordre de 2000 Pa.s.

## Revendications

### Revendications pour les Etats contractants suivants : AT, BE, CH, DE, FR, GB, IT, LI, LU, NL, SE

**1.** Prépolymères thermodurcissables à groupements imides, présentant une viscosité à l'état fondu mesuré à une température de + 80°C ± 0,1°C comprise entre 0,1 Pa.s et 500 Pa.s, qui comprennent le produit de réaction, à une température allant de 50°C à 180°C, entre :

- (a) un N,N'-bis-imide ou une association de plusieurs bis-imides de formule :

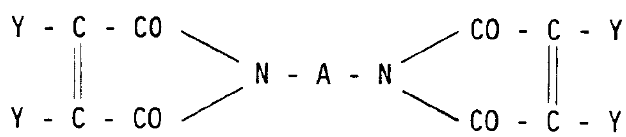

(I)

dans laquelle :

. les symboles Y, identiques ou différents, représentent chacun H, $CH_3$ ou Cl ;

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

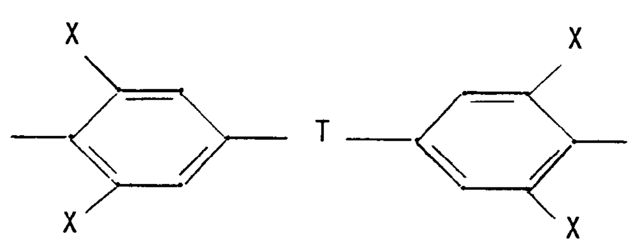

dans laquelle T représente un lien valentiel simple ou un groupement :

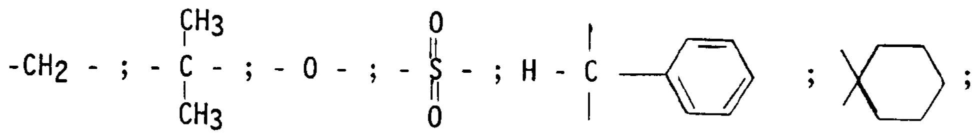

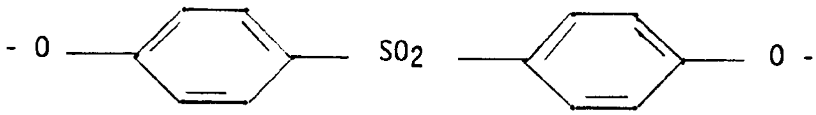

et les symboles X, identiques ou différents, représentent chacun un atome d'hydogène, un radical méthyle, éthyle, propyle ou isopropyle ; et

- (b) une ou plusieurs diamine(s) biprimaire(s) encombrée(s) prise(s) dans le groupes formé par :

(i) les espéces répondant à la formule générale :

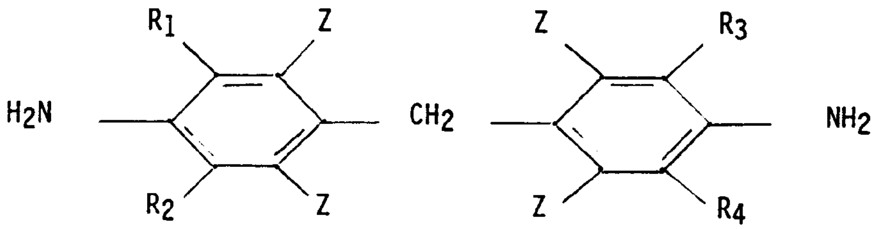

(II)

dans laquelle :

. les symboles $R_1$, $R_2$, $R_3$ et $R_4$, identiques ou différents, représentent chacun un radical méthyle, éthyle, propyle ou isopropyle ;

. les symboles Z, identiques ou différents, représentent chacun un atome d'hydrogène ou un atome de chlore ;

(2i) et les espèces répondant à la formule générale :

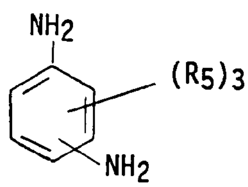

(III)

dans laquelle :

. les radicaux amino sont en position méta ou para, l'un par rapport à l'autre ;

. les symboles $R_5$, identiques ou différents, représentant chacun un radical méthyle, éthyle, propyle ou isopropyle ;

lesdits prépolymères à groupes imides étant caractérisés en ce que le milieu de réaction qui sert à les préparer contient en outre :

- un (ou des) réactif(s) (c) et/ou (d), (c) consistant dans un ou plusieurs hétérocyle(s) substitué(s) pris dans le groupe formé par : les vinylpyridines, la N-vinylpyrrolidone-2, l'isocyanurate d'allyle, le vinyltétrahydrofuranne, (d) consistant dans un composé imidazole,

- et un réactif acrylate (e) consistant dans un ou plusieurs composé(s) de formule générale :

$$(CH_2 = CR_6 - CO - O)_n - B \qquad (IV)$$

dans laquelle :

. le symbole $R_6$ représente un atome d'hydrogène ou un radical méthyle ;

. n représente un nombre entier ou fractionnaire au moins égal à 1 et au plus égal à 8 ;

. le symbole B représente un radical organique de valence n dérivé : d'un reste aliphatique saturé, linéaire ou ramifié, ayant de 1 à 30 atomes de carbone et pouvant renfermer un ou plusieurs pont(s) oxygène et/ou une ou plusieurs fonction(s) hydroxyle(s) libre(s) ; d'un reste aromatique (de type arylique ou arylaliphatique) ayant de 6 à 150 atomes de carbone constitué par un noyau benzénique, pouvant être substitué par un à trois radicaux alkyles ayant de 1 à 5 atomes de carbone, ou par plusieurs noyaux benzéniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa stucture un ou plusieurs pont(s) oxygène et/ou une ou plusieurs fonction(s) hydroxyle(s) libre(s), le (ou les) valence(s) libre(s) du radical B aromatique pouvant être portée(s) par un atome de carbone d'une chaîne aliphatique et/ou par un atome de carbone d'un noyau benzénique,

. le rapport molaire de composés bis-maléimides par rapport aux composés diamines étant compris entre 20/1 et 1,1/1.

**2.** Prépolymères selon la revendication 1, caractérisés en ce que le réactif (a) est pris dans le groupe formé par :
- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide.
- et leurs mélanges.

**3.** Prépolymères selon l'une quelconque des revendications 1 et 2, caractérisés en ce que le réactif (b) est pris dans le groupe formé par :
- le diamino-4,4' tétraméthyl-3,3',5,5' diphénylméthane,
- le diamino-4,4' tétraéthyl-3,3',5,5' diphénylméthane,
- le diamino-4,4' diméthyl-3,5 diéthyl-3',5' diphénylméthane,
- le diamino-4,4'diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le diamino-4,4'dichloro-2,2' tétraéthyl-3,3',5,5' diphénylméthane,
- le diamino-1,3 diéthyl-2,4 méthyl-6 benzène,
- le diamino-1,3 méthyl-2 diéthyl-4,6 benzène,
- et leur mélanges.

**4.** Prépolymères selon l'une quelconque des revendications 1 à 3, caractérisés en ce que le réactif (e) consiste dans un ou plusieurs composé(s) appartenant aux types (e1), (e2), (e3), (e4) et (e5) suivants :

(e1) les mono(méth)acrylates correspondant à la formule (IV) dans laquelle :

. n = 1, et

. B représente un radical organique monovalent de formule :

$$-(CH_2\ CH_2O)_m-B_1 \qquad (VI)$$

dans laquelle : $B_1$ représente un radical alkyle, linéaire ou ramifié, ayant de 1 à 6 atomes de carbone ou un radical phényle ; et m est un nombre entier égal à zéro, 1, 2, 3, 4 ou 5 ;

(e2) les di(méth)acrylates correspondant à la formule (IV) dans laquelle :

. n = 2, et

. B représente un radical organique divalent de formule :

$$-(CH_2\ CH_2O)_p-B_2-(OCH_2\ CH_2)_q-$$ (VII)

dans laquelle : $B_2$ représente un radical divalent alkylène, linéaire ou ramifié, ayant de 2 à 9 atomes de carbone et pouvant renfermer un ou plusieurs pont(s) oxygène ou un radical de formule

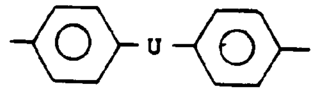

dans laquelle le symbole U représente un lien valentiel simple ou un groupement :

$-CH_2-$, $-CH_2-CH_2-$, $-CH(CH_3)CH_2-$,

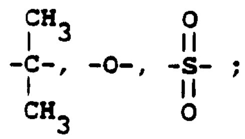

les symboles p et q, identiques ou différents, représentent chacun un nombre entier égal à zero, 1, 2, 3, 4 ou 5 ;

(e3) les tri- et tétra(méth)acrylates correspondant à la formule (IV) dans laquelle :

. n = 3 ou 4, et

. B représente un radical organique trivalent ou tétravalent dérivé d'un reste aliphatique saturé, linéaire ou ramifié, ayant de 3 à 20 atomes de carbone et pouvant renfermer un ou plusieurs pont(s) oxygène et/ou une ou plusieurs fonction(s) hydroxyle(s) libre(s) ;

(e4) les(méth)acrylates d'epoxy novolaques qui, tout en correspondant à la formule (IV), sont représentés ici par la formule suivante :

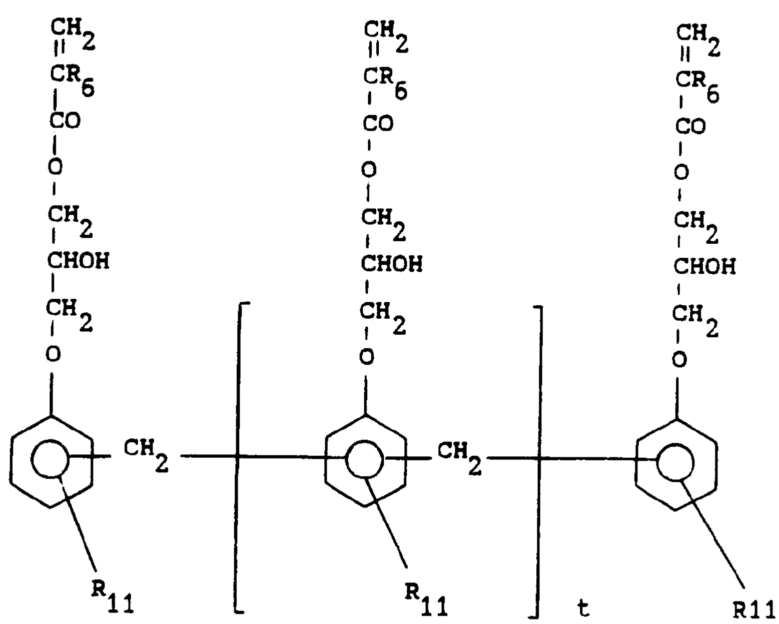

(VIII)

dans laquelle :

- le symbole $R_6$ a la signification donnée ci-avant à propos de la formule (IV) ;
- le symbole $R_{11}$ représente un atome d'hydrogène ou un radical méthyle ;
- t est un nombre entier ou fractionnaire se situant dans l'intervalle allant de 0,1 à 7 ;

(e5) des mélanges de plusieurs acrylates et/ou méthacrylates d'un même type (e1), (e2), (e3) ou (e4) entre eux ou des mélanges d'un ou plusieurs acrylate(s) et/ou méthacrylate(s) d'un même type avec un ou plusieurs acrylate(s) et/ou méthacrylate(s) d'un autre type.

**5.** Prépolymères selon l'une quelconque des revendications 1 à 4, caractérisés en ce que le réactif (c), quand il est utilisé, est employé en quantité représentant moins de 60 % du poids du réactif (a) + (b).

**6.** Prépolymères selon l'une quelconque des revendications 1 à 5, caractérisés en ce que le réactif (d), quand il est utilisé, est employé en quantités se situant dans l'intervalle allant de 0,01 à 1 % en poids par rapport à l'ensemble des réactifs (a) + (b) + (e) + éventuellement (c).

**7.** Prépolymères selon l'une quelconque des revendications 1 à 6, caractérisés en ce que le réactif (e) est utilisé en quantités représentant de 1 % à 60 % du poids total des réactifs (a) + (b) + (e) + éventuellement (c).

**8.** Procédé de préparation des prépolymères selon l'une quelconque des revendications 1 à 7, caractérisé en ce que l'on enchaîne les étapes suivantes :

- étape 1 : on fait fondre le mélange (a) + (b) en opérant sous agitation et à une température comprise entre 50°C et 180°C, le rapport molaire de composés (a) par rapport aux composés (b) étant compris entre 20/1 et 1,1/1,
- puis, étape 2, on ajoute dans le mélange fondu qui est agité et maintenu à une température, identique ou différente de celle mise en oeuvre dans l'étape précédente, comprise entre 50°C et 180°C, le (ou les) réactif(s) (c) et/ou (d) et on laisse le milieu réactionnel réagir sous agitation pendant une durée allant de 1 minute à 20 minutes,
- et, étape 3, au bout de ce temps, on introduit rapidement dans le milieu réactionnel, toujours sous agitation et maintenu à la température de l'étape précédente d'addition du (ou des) réactif(s) (c) et/ou (d), le réactif (e) et, une fois ce réactif introduit, on coule immédiatement le prépolymère formé à l'extérieur du réacteur ayant servi à la préparer.

**9.** Application des prépolymères selon l'une quelconque des revendications 1 à 7 à la fabrication de pièces selon la technique de l'enroulement filamentaire et à la réalisation d'articles intermédiaires préimprégnés en utilisant la technique de l'imprégnation sans solvant de matériaux fibreux divers.

**Revendications pour l'Etat contractant suivant : ES**

**1.** Procédé de préparation de prépolymères thermodurcissables à groupements imides, présentant une viscosité à l'état fondu mesurée à une température de 80°C ± 0,1°C comprise entre 0,1 Pa.s et 500 Pa.s, caractérisé en ce que l'on enchaîne les étapes suivantes :

∗ étape 1 : on fait fondre le mélange des réactifs (a) + (b) définis ci-après en opérant sous agitation et à une température comprise entre 50°C et 180°C :

- (a) étant un N,N'-bis-imide ou une association de plusieurs bis-imides de formule :

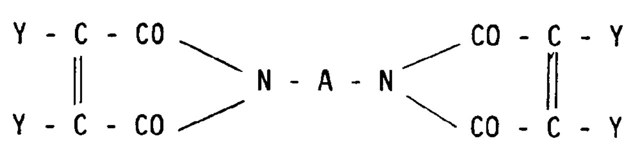

(I)

dans laquelle :

. les symboles Y, identiques ou différents, représentent chacun H, $CH_3$ ou Cl ;

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

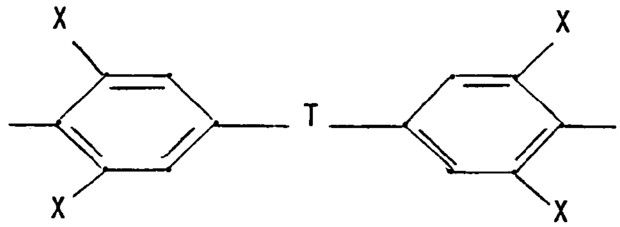

dans laquelle T représente un lien valentiel simple ou un groupement :

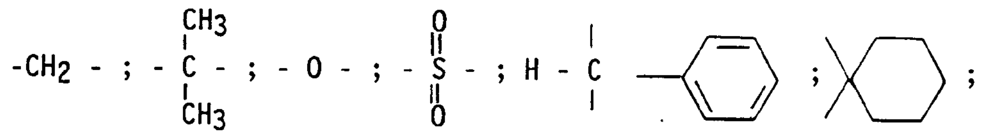

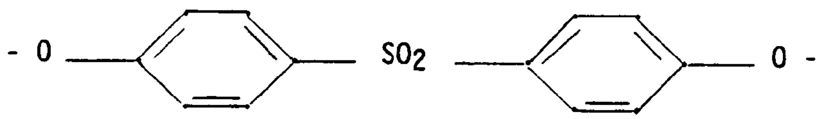

et les symboles X, identiques ou différents, représentent chacun un atome d'hydogène, un radical méthyle, éthyle, propyle ou isopropyle ; et

- (b) étant une ou plusieurs diamine(s) biprimaire(s) encombrée(s) prise(s) dans le groupes formé par :

(i) les espéces répondant à la formule générale :

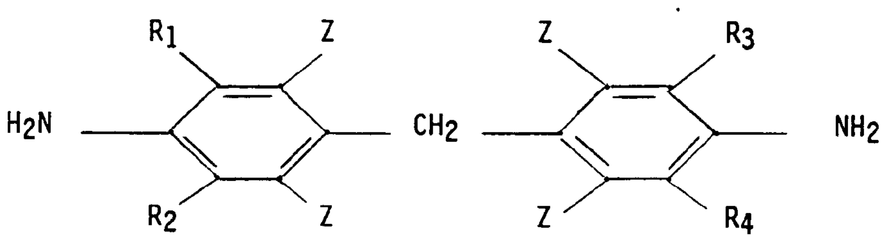

(II)

dans laquelle :

. les symboles $R_1$, $R_2$, $R_3$ et $R_4$, identiques ou différents, représentent chacun un radical méthyle, éthyle, propyle ou isopropyle ;

. les symboles Z, identiques ou différents, représentent chacun un atome d'hydrogène ou un atome de chlore ;

(2i) et les espèces répondant à la formule générale :

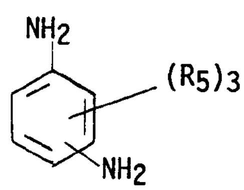

(III)

dans laquelle :

. les radicaux amino sont en position méta ou para, l'un par rapport à l'autre ;

. les symboles $R_5$, identiques ou différents, représentant chacun un radical méthyle, éthyle, propyle ou isopropyle ;

* puis, étape 2 : on ajoute dans le mélange fondu qui est agité et maintenu à une température, identique ou différente de celle mise en oeuvre dans l'étape précédente, comprise entre 50°C et 180°C, le (ou

les) réactif(s) (c) et/ou (d) définis ci-après :

- (c) consistant dans un ou plusieurs hétérocyle(s) substitué(s) pris dans le groupe formé par : les vinylpyridines, la N-vinylpyrrolidone-2, l'isocyanurate d'allyle, le vinyltétrahydrofuranne, et
- (d) consistant dans un composé imidazole,

et on laisse le milieu réactionnel réagir sous agitation pendant une durée allant de 1 minute à 20 minutes ;

∗ et, étape 3 : au bout de ce temps, on introduit rapidement dans le milieu réactionnel, toujours sous agitation et maintenu à la température de l'étape précédente d'addition du (ou des) réactif(s) (c) et/ou (d), le réactif (e) défini ci-après et, une fois ce réactif introduit, on coule immédiatement le prépolymère formé à l'extérieur du réacteur ayant servi à la préparer :

- (e) étant un réactif acrylate qui consiste dans un ou plusieurs composé(s) de formule générale :

$$(CH_2 = CR_6 - CO - O)_n\text{——} B \qquad (IV)$$

dans laquelle :

. le symbole $R_6$ représente un atome d'hydrogène ou un radical méthyle ;

. n représente un nombre entier ou fractionnaire au moins égal à 1 et au plus égal à 8 ;

. le symbole B représente un radical organique de valence n dérivé : d'un reste aliphatique saturé, linéaire ou ramifié, ayant de 1 à 30 atomes de carbone et pouvant renfermer un ou plusieurs pont(s) oxygène et/ou une ou plusieurs fonction(s) hydroxyle(s) libre(s) ; d'un reste aromatique (de type arylique ou arylaliphatique) ayant de 6 à 150 atomes de carbone constitué par un noyau benzénique, pouvant être substitué par un à trois radicaux alkyles ayant de 1 à 5 atomes de carbone, ou par plusieurs noyaux benzéniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa stucture un ou plusieurs pont(s) oxygène et/ou une ou plusieurs fonction(s) hydroxyle(s) libre(s), le (ou les) valence(s) libre(s) du radical B aromatique pouvant être portée(s) par un atome de carbone d'une chaîne aliphatique et/ou par un atome de carbone d'un noyau benzénique, et avec un rapport molaire entre les composés bis-maléimides et les composés diamines compris entre 1,1/1 et 20/1.

**2.** Procédé selon la revendication 1, caractérisé en ce que le réactif (a) est pris dans le groupe formé par :

- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide.
- et leurs mélanges.

**3.** Procédé selon l'une quelconque des revendications 1 et 2, caractérisé en ce que le réactif (b) est pris dans le groupe formé par :

- le diamino-4,4' tétraméthyl-3,3',5,5' diphénylméthane,
- le diamino-4,4' tétraéthyl-3,3',5,5' diphénylméthane,
- le diamino-4,4' diméthyl-3,5 diéthyl-3',5' diphénylméthane,
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le diamino-4,4' dichloro-2,2' tétraéthyl-3,3',5,5' diphénylméthane,
- le diamino-1,3 diéthyl-2,4 méthyl-6 benzène,

- le diamino-1,3 méthyl-2 diéthyl-4,6 benzène,
- et leur mélanges.

**4.** Procédé selon l'une quelconque des revendications 1 à 3, caractérisé en ce que le réactif (e) consiste dans un ou plusieurs composé(s) appartenant aux types (e1), (e2), (e3), (e4) et (e5) suivants :

(e1) les mono(méth)acrylates correspondant à la formule (IV) dans laquelle :

. n = 1, et

. B représente un radical organique monovalent de formule :

$$-(CH_2\ CH_2O)_m - B_1 \qquad (VI)$$

dans laquelle : $B_1$ représente un radical alkyle, linéaire ou ramifié, ayant de 1 à 6 atomes de carbone ou un radical phényle ; et m est un nombre entier égal à zéro, 1, 2, 3, 4 ou 5 ;

(e2) les di(méth)acrylates correspondant à la formule (IV) dans laquelle :

. n = 2, et

. B représente un radical organique divalent de formule :

$$-(CH_2\ CH_2O)_p - B_2 - (OCH_2\ CH_2)_q - \qquad (VII)$$

dans laquelle : $B_2$ représente un radical divalent alkylène, linéaire ou ramifié, ayant de 2 à 9 atomes de carbone et pouvant renfermer un ou plusieurs pont(s) oxygène ou un radical de formule

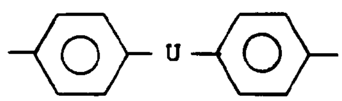

dans laquelle le symbole U représente un lien valentiel simple ou un groupement :

$-CH_2-$, $-CH_2-CH_2$, $-CH(CH_3)CH_2-$,

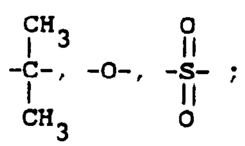

les symboles p et q, identiques ou différents, représentent chacun un nombre entier égal à zéro, 1, 2, 3, 4 ou 5 ;

(e3) les tri- et tétra(méth)acrylates correspondant à la formule (IV) dans laquelle :

. n = 3 ou 4, et

. B représente un radical organique trivalent ou tétravalent dérivé d'un reste aliphatique saturé, linéaire ou ramifié, ayant de 3 à 20 atomes de carbone et pouvant renfermer un ou plusieurs pont(s) oxygène et/ou une ou plusieurs fonction(s) hydroxyle(s) libre(s) ;

(e4) les (méth)acrylates d'époxy novolaques qui, tout en correspondant à la formule (IV), sont représentés ici par la formule suivante :

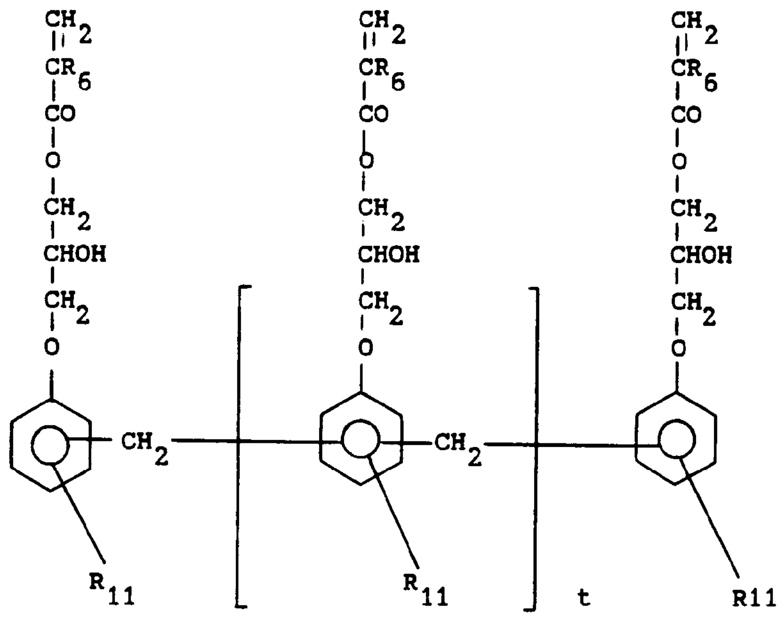

(VIII)

dans laquelle :

. le symbole $R_6$ a la signification donnée ci-avant à propos de la formule (IV) ;

. le symbole $R_{11}$ représente un atome d'hydrogène ou un radical méthyle ;

. t est un nombre entier ou fractionnaire se situant dans l'intervalle allant de 0,1 à 7 ;

(e5) des mélanges de plusieurs acrylates et/ou méthacrylates d'un même type [(e1), (e2), (e3) ou (e4)] entre eux ou des mélanges d'un ou plusieurs acrylate(s) et/ou méthacrylate(s) d'un même type avec un ou plusieurs acrylate(s) et/ou méthacrylate(s) d'un autre type.

5. Procédé selon l'une quelconque des revendications 1 à 4, caractérisé en ce que le réactif (c), quand il est utilisé, est employé en quantité représentant moins de 60 % du poids du réactif (a) + (b).

6. Procédé selon l'une quelconque des revendications 1 à 5, caractérisé en ce que le réactif (d), quand il est utilisé, est employé en quantités se situant dans l'intervalle allant de 0,01 à 1 % en poids par rapport à l'ensemble des réactifs (a) + (b) + (e) + éventuellement (c).

7. Procédé selon l'une quelconque des revendications 1 à 6, caractérisé en ce que le réactif (e) est utilisé en quantités représentant de 1 % à 60 % du poids total des réactifs (a) + (b) + (e) + éventuellement (c).

## Patentansprüche

### Patentansprüche für folgende Vertragsstaaten : AT, BE, CH, DE, FR, GB, IT, LI, LU, NL, SE

1. Wärmehärtbare Prepolymere mit Imidgruppen, welche eine Schmelzviskosität, gemessen bei einer Temperatur von +80 °C ± 0,1 °C zwischen 0,1 Pa.s und 500 Pa.s aufweisen, welche das Produkt der Reaktion bei einer Temperatur von 50 °C bis 180 °C umfassen zwischen:

(a) einem N,N'-Bisimid oder einer Vereinigung mehrerer Bisimide der Formel (I):

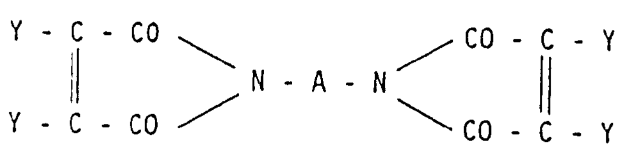

(I)

worin :

. die Symbole Y, welche identisch oder verschieden sind, jeweils H, $CH_3$ oder Cl bedeuten;

. das Symbol A einen zweiwertigen Rest darstellt, ausgewählt aus der Gruppe bestehend aus den Resten: Cyclohexylen, Phenylen, 4-Methyl-1,3-phenylen, 2-Methyl-1,3-phenylen, 5-Methyl-1,3-phenylen, 2,5-Diethyl-3-methyl-1,4-phenylen, und den Resten der Formel:

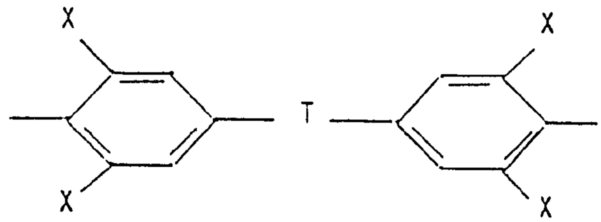

worin T eine einfache Valenzbindung oder eine Gruppe:

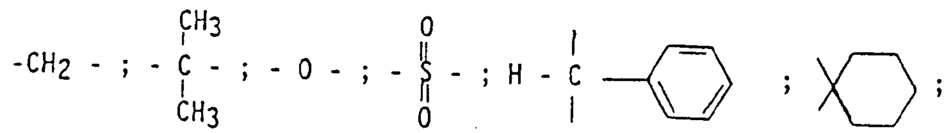

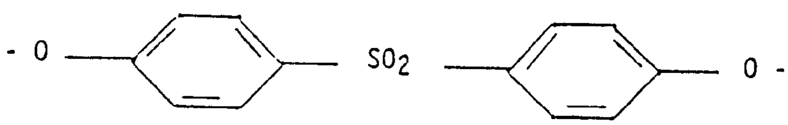

bedeutet
und die Symbole X, die identisch oder verschieden sind, jeweils ein Wasserstoffatom, einen Methyl-, Ethyl-, Propyl- oder Isopropylrest bedeuten; und

(b) einem oder mehreren gehinderten biprimären Diamin(en) genommen aus den Gruppen gebildet durch:

(i) den Arten entsprechend der allgemeinen Formel (II)

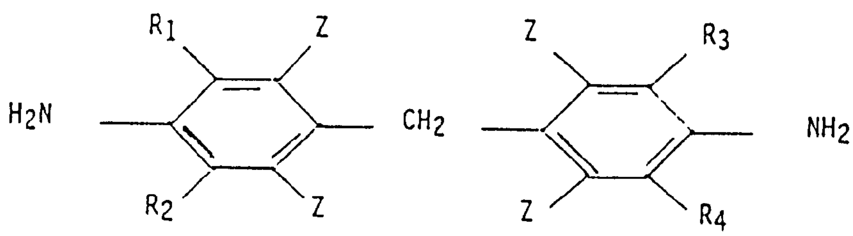
(II)

worin:

- die Symbole $R_1$, $R_2$, $R_3$ und $R_4$, die identisch oder verschieden sind, jeweils einen Methyl-, Ethyl-, Propyl-, oder Isopropylrest bedeuten;
- die Symbole Z, die identisch oder verschieden sind, jeweils ein Wasserstoffatom oder ein Chloratom darstellen;

(ii) und den Gruppen der allgemeinen Formel (III)

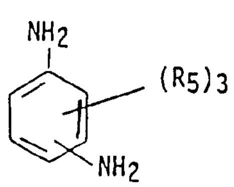
(III)

worin:

- die Aminoreste in meta- oder para-Stellung, der eine zu dem anderen, sind;
- die Symbole $R_5$, die identisch oder verschieden sind, jeweils einen Methyl-, Ethyl-, Propyl- oder Isopropylrest darstellen;

wobei diese Prepolymeren mit Imidgruppen dadurch gekennzeichnet sind, daß das Reaktionsmilieu, das zu ihrer Herstellung dient, außerdem enthält:

- einen oder mehrere Reaktanten (c) und/oder (d), wobei (c) aus einem oder mehreren substituierten Heterozyklus/en besteht, genommen aus der Gruppe gebildet durch: Vinylpyridinen, N-Vinylpyrrolidon-2, Allylisocyanurat, Vinyltetrahydrofuran, und (d) aus einer Imidazolverbindung besteht,
- und einen Acrylatreaktanten (e), bestehend aus einer oder mehreren Verbindung(en) der allgemeinen Formel (IV)

$$(CH_2 = CR_6 - CC - O \xrightarrow[n]{} B \qquad (IV)$$

worin:

. das Symbol $R_5$ ein Wasserstoffatom oder einen Methylrest bedeutet;
. n eine ganze Zahl oder Bruchzahl mindestens gleich 1 und höchstens gleich 8 darstellt;
. das Symbol B einen organischen Rest der Wertigkeit n bedeutet, abgeleitet von einem linearen oder verzweigten gesättigten aliphatischen Rest mit 1 bis 30 Kohlenstoffatomen, der eine oder mehrere Sauerstoffbrücke(n) und/oder eine oder mehrere freie Hydroxylfunktion(en) einschließen kann; einem aromatische Rest (vom aryl- oder arylaliphatischen Typ) mit 6 bis 150 Kohlenstoffatomen bestehend aus einem Benzolring, der durch 1 bis 3 Alkylreste mit 1 bis 5 Kohlenstoffatomen substituiert sein kann, oder aus mehreren Benzolringen, die gegebenenfalls wie vorstehend angegeben substituiert sind, die untereinander durch eine einfache Valenzbindung verbunden sind, eine inerte Gruppe oder einem Alkylenrest mit 1 bis 3 Kohlenstoffatomen, wobei dieser aromatische Rest an verschiedenen Stellen seiner Struktur eine oder mehrere Sauerstoffbrücke(n) und/oder eine oder mehrere freie Hydroxylfunktion(en) einschließen kann, und die oder die freie(n) Valenz(en) des aromatischen Restes B durch ein Kohlenstoffatom einer aliphatischen Kette und/ oder durch ein Kohlenstoffatom eines Benzolkerns getragen sein kann/können;
. wobei das Molverhältnis der Bismaleimidverbindungen in bezug auf die Diaminverbindungen zwischen 20/1 und 1,1/1 liegt.

**2.** Prepolymere gemäß Anspruch 1, dadurch gekennzeichnet, daß der Reaktant (a) genommen ist aus der Gruppe gebildet durch:

- N,N′-Metaphenylen-bismaleimid
- N,N′-Paraphenylen-bismaleimid
- N,N′-4,4′-Diphenylmethan-bismaleimid
- N,N′-4,4′-Diphenylether-bismaleimid
- N,N′-4,4′-Diphenylsulfon-bismaleimid
- N,N′-1,4-Cyclohexylen-bismaleimid
- N,N′-4,4′-1,1-Diphenylcyclohexan-bismaleimid
- N,N′-4,4′-2,2-Diphenylpropan-bismaleimid
- N,N′-4,4′-Triphenylmethan-bismaleimid
- N,N′-2-Methyl-1,3-phenylen-bismaleimid
- N,N′-4-Methyl-1,3-phenylen-bismaleimid
- N,N′-5-Methyl-1,3-phenylen-bismaleimid

und deren Gemische.

**3.** Prepolymere gemäß einem der Ansprüche 1 und 2, dadurch gekennzeichnet, daß der Reaktant (b) genommen ist aus der Gruppe gebildet aus:

- 4,4′-Diamino-3,3′,5,5′-tetramethyl-diphenylmethan
- 4,4′-Diamino-3,3′,5,5′-tetraethyl-diphenylmethan
- 4,4′-Diamino-3,5-dimethyl-3′,5′-diethyl-diphenylmethan
- 4,4′-Diamino-3,3′-diethyl-5,5′-dimethyl-diphenylmethan

- 4,4'-Diamino-3,3',5,5'-tetraisopropyl-diphenylmethan
- 4,4'-Diamino-3,3'-diisopropyl-5,5'-dimethyl-diphenylmethan
- 4,4'-Diamino-2,2'-dichlor-3,3',5,5'-tetraethyl-diphenylmethan
- 1,3-Diamino-2,4-diethyl-6-methyl-benzol
- 1,3-Diamino -2-methyl-4,6-diethyl-benzol

und deren Gemische.

**4.** Prepolymere gemäß einem der Ansprüche 1 bis 3, dadurch gekennzeichnet, daß der Reaktant (e) aus einer oder mehreren Verbindung(en) besteht, gehörend zu den folgenden Typen (e1), (e2), (e3), (e4) und (e5):

(e1) die Mono(meth)acrylate entsprechend der Formel (IV), worin

. n = 1, und

. B einen einwertigen organischen Rest der Formel (VI)

$$-(CH_2\ CH_2O)_m - B_1 \qquad (VI)$$

darstellt, worin: $B_1$ einen linearen oder verzweigten Alkylrest mit 1 bis 6 Kohlenstoffatomen oder einen Phenylrest bedeutet; und m eine ganze Zahl gleich Null, 1, 2, 3, 4 oder 5 ist;

(e2) die Di(meth)acrylate entsprechend der Formel (IV), worin:

. n = 2, und

. B bedeutet einen zweiwertigen organischen Rest der Formel (VII)

$$-(CH_2\ CH_2O)_p - B_2 - (OCH_2\ CH_2)_q - \qquad (VII)$$

worin: $B_2$ einen linearen oder verzweigten zweiwertigen Alkylrest mit 2 bis 9 Kohlenstoffatomen darstellt, der eine oder mehrere Sauerstoffbrücke(n) enthalten kann, oder einen Rest der Formel

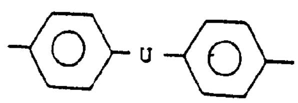

worin das Symbol U eine einfache Valenzbindung darstellt oder eine Gruppe

$$-CH_2-,\ -CH_2-CH_2-,\ -CH(CH_3)CH_2-,\ -\overset{CH_3}{\underset{CH_3}{\overset{|}{\underset{|}{C}}}}-,\ -O-,\ -\overset{O}{\underset{O}{\overset{||}{\underset{||}{S}}}}-$$

darstellt; die Symbole p und q, die identisch oder verschieden sind, bedeuten jeweils eine ganze Zahl gleich Null, 1, 2, 3, 4 oder 5;

(e3) die Tri- und Tetra(meth)acrylate entsprechend der Formel (IV), worin:

. n = 3 oder 4; und

. B bedeutet einen dreiwertigen oder vierwertigen organischen Rest, abgeleitet von einem linearen oder verzweigten gesättigten aliphatischen Rest mit 3 bis 20 Kohlenstoffatomen, der eine oder mehrere Sauerstoffbrücke(n) enthalten kann und/oder eine oder mehrere freie Hydroxylfunktion(en);

(e4) die Novolakepoxymethacrylate, welche der Formel (IV) entsprechen und hier durch die folgende Formel dargestellt sind:

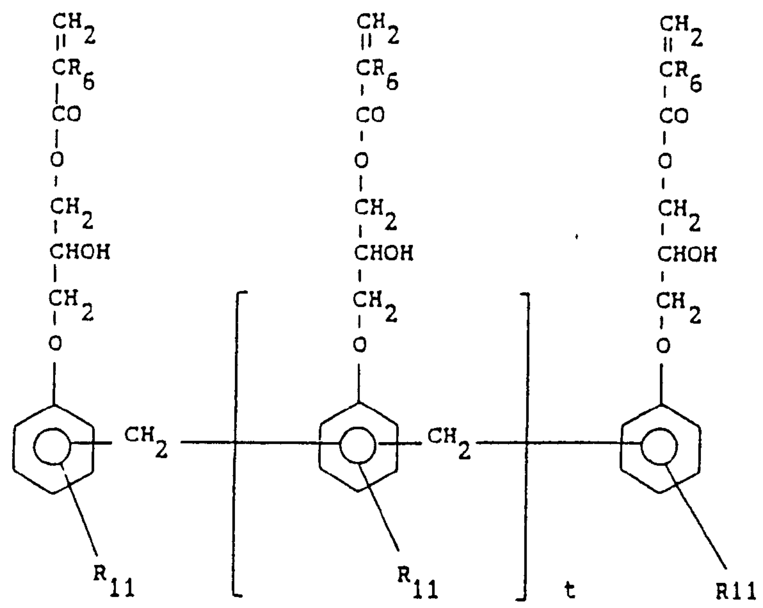

(VIII)

worin:

. das Symbol $R_6$ die vorstehend bei Formel (IV) angegebene Bedeutung hat;

. das Symbol $R_{11}$ ein Wasserstoffatom oder einen Methylrest bedeutet;

. t eine ganze Zahl oder Bruchzahl in dem Bereich von 0,1 bis 7 ist;

(e5) Mischungen von mehreren Acrylaten und/oder Methacrylaten des gleichen Typs (e1), (e2), (e3) oder (e4) untereinander und Mischungen eines oder mehrerer Acrylate(s) und/ oder Methacrylate(s) des gleichen Typs mit einem oder mehreren Acrylate(n) und/oder Methacrylate(n) eines anderen Typs.

**5.** Prepolymere gemäß einem der Ansprüche 1 bis 4, dadurch gekennzeichnet, daß der Reaktant (c), falls er verwendet wird, in einer Menge angewandt wird, die weniger als 60 % des Gewichts des Reaktanten (a) + (b) beträgt.

**6.** Prepolymere gemäß einem der Ansprüche 1 bis 5, dadurch gekennzeichnet, daß der Reaktant (d), falls er verwendet wird, in Mengen angewandt wird, die in dem Bereich von 0,01 bis 1 Gew.-% in bezug auf die Gesamtheit der Reaktanten (a) + (b) + (e) + gegebenenfalls (c) liegt.

**7.** Prepolymere gemäß einem der Ansprüche 1 bis 6, dadurch gekennzeichnet, daß der Reaktant (e) in Mengen verwendet wird, die 1 % bis 60 % des Gesamtgewichtes der Reaktanten (a) + (b) + (e) + gegebenenfalls (c) darstellen.

**8.** Verfahren zur Herstellung der Prepolymeren gemäß einem der Ansprüche 1 bis 7, dadurch gekennzeichnet, daß man die folgenden Stufen aneinanderreiht:

- Stufe 1: Man bringt das Gemisch (a) + (b) zum Schmelzen, indem unter Rühren bei einer Temperatur zwischen 50 °C und 180 °C gearbeitet wird, wobei das Molverhältnis der Verbindungen (a) in bezug auf die Verbindungen (b) zwischen 20/1 und 1,1/1 liegt;
- Stufe 2: dann gibt in das geschmolzene Gemisch, das gerührt und bei einer Temperatur gehalten wird, die identisch oder von derjenigen der vorhergehenden Stufe verschieden ist, zwischen 50 °C und 180 °C den (oder die) Reaktent(en) (c) und/oder (d) zu und läßt das Reaktionsmilieu unter Rühren während einer Dauer von 1 Minute bis 20 Minuten reagieren; und
- Stufe 3: am Ende dieser Zeit führt man rasch in das Reaktionsmilieu, immer unter Rühren und Aufrechterhaltung der Temperatur der vorhergehenden Stufe der Zugabe des oder der Reaktanten (c) und/oder (d), den Reaktanten (e) ein, und wenn dieser Reaktant einmal eingeführt ist, gießt man das gebildete Prepolymere sofort außerhalb des Reaktors, der zu seiner Herstellung gedient hat.

**9.** Anwendung der Prepolymeren gemäß einem der Ansprüche 1 bis 7 zur Erzeugung von Stücken gemäß der Fadenaufwickeltechnik und zur Herstellung von vorimprägnierten Zwischenerzeugnissen, indem die

Technik der Imprägnierung ohne Lösungsmittel von verschiedenen Fasermaterialien angewandt wird.

**Patentansprüche für folgenden Vertragsstaat : ES**

1. Verfahren zur Herstellung von wärmehärtbaren Prepolymeren mit Imidgruppen, welche eine Schmelzviskosität, gemessen bei einer Temperatur von +80°C ± 0,1 °C zwischen 0,1 Pa.s und 500 Pa.s aufweisen, dadurch gekennzeichnet, daß man die folgenden Stufen aneinanderreiht:

   ∗ Stufe 1: Man bringt das Gemisch der im folgenden definierten Reaktanten (a) + (b) zum Schmelzen, indem unter Rühren und bei einer Temperatur zwischen 50 °C bis 180 °C gearbeitet wird:

   (a) ist ein N,N'-Bisimid oder eine Vereinigung mehrerer Bisimide der Formel (I):

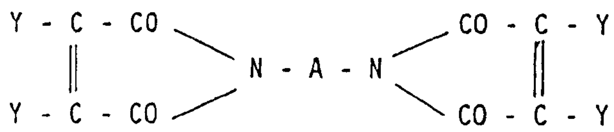

(I)

worin :

. die Symbole Y, welche identisch oder verschieden sind, jeweils H, $CH_3$ oder Cl bedeuten;

. das Symbol A einen zweiwertigen Rest darstellt, ausgewählt aus der Gruppe bestehend aus den Resten: cyclohexylen, Phenylen, 4-Methyl-1,3-phenylen, 2-Methyl-1,3-phenylen, 5-Methyl-1,3-phenylen, 2,5-Diethyl-3-methyl-1,4-phenylen, und den Resten der Formel:

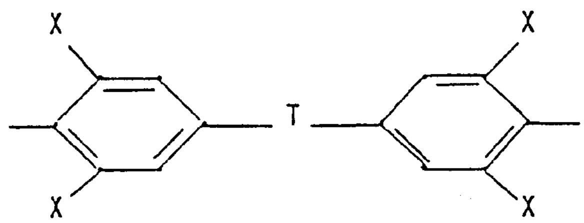

worin T eine einfache Valenzbindung oder eine Gruppe:

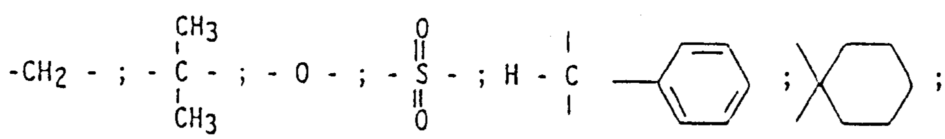

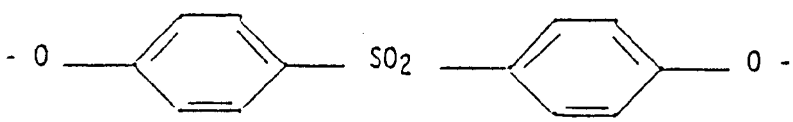

bedeutet, und die Symbole X, die identisch oder verschieden sind, jeweils ein Wasserstoffatom, einen Methyl-, Ethyl-, Propyl- oder Isopropylrest bedeuten; und

(b) ist ein gehindertes biprimäres Diamin oder mehrere gehinderte biprimäre Diamine genommen aus den Gruppen gebildet durch:

(i) den Arten entsprechend der allgemeinen Formel (II)

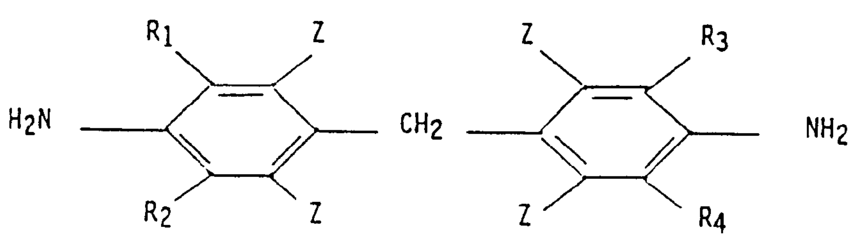

(II)

worin:

. die Symbole $R_1$, $R_2$, $R_3$ und $R_4$, die identisch oder verschieden sind, jeweils einen Methyl-, Ethyl-, Propyl-, oder Isopropylrest bedeuten;

. die Symbole Z, die identisch oder verschieden sind, jeweils ein Wasserstoffatom oder ein chloratom darstellen;

(ii) und den Gruppen der allgemeinen Formel (III)

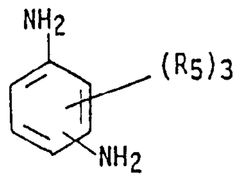

(III)

worin:

. die Aminoreste in meta- oder para-Stellung, der eine zu dem anderen, sind;

. die Symbole $R_5$, die identisch oder verschieden sind, jeweils einen Methyl-, Ethyl-, Propyl- oder Isopropylrest darstellen;

dann

∗ Stufe 2:

man gibt in das geschmolzene Gemisch, das gerührt und bei einer Temperatur gehalten ist, die identisch oder verschieden von derjenigen ist, die in der vorhergehenden Stufe eingesetzt wurde, zwischen 50 °C und 180 °C, den oder die nachstehend definierten Reaktanten (c) und/oder (d),

- (c) besteht aus einem oder mehreren substituierten Heterozyklus/en, genommen aus der Gruppe gebildet durch: die Vinylpyridine, N-Vinylpyrrolidon-2, Allylisocyanurat, Vinyltetrahydrofuran, und ,
- (d) besteht aus einer Imidazolverbindung,

und man läßt das Reaktionsmilieu unter Rühren während einer Dauer von 1 Minute bis 20 Minuten reagieren;

und

∗ Stufe 3: am Ende dieser Zeit führt man rasch in das Reaktionsmilieu, immer unter Rühren und Aufrechterhaltung bei der Temperatur der vorhergehenden Stufe der Zugabe des oder der Reaktanten (c) und/oder (d), das nachstehend definierte Reagens (e) ein und wenn dieses Reagens einmal eingeführt ist, gießt man das gebildete Prepolymere sofort außerhalb des Reaktors, der zu seiner Herstellung gedient hat; wobei

(e) ein Acrylatreaktant ist, der aus einer oder mehreren Verbindung(en) der allgemeinen Formel (IV)

$$(CH_2 = CR_6 - CO - O)_n\, B \qquad (IV)$$

besteht, worin

. das Symbol $R_5$ ein Wasserstoffatom oder einen Methylrest bedeutet;

. n eine ganze Zahl oder Bruchzahl mindestens gleich 1 und höchstens gleich 8 darstellt;

. das Symbol B einen organischen Rest der Wertigkeit n bedeutet, abgeleitet von einem linearen oder verzweigten gesättigten aliphatischen Rest mit 1 bis 30 Kohlenstoffatomen, der eine oder mehrere Sauerstoffbrücke(n) und/oder eine oder mehrere freie Hydroxylfunktion(en) einschließen kann; von einem aromatischen Rest (vom aryl- oder arylaliphatischen Typ) mit 6 bis 150 Kohlenstoffatomen, bestehend aus einem Benzolring, der durch 1 bis 3 Alkylreste mit 1 bis 5 Kohlenstoffatomen substituiert sein kann oder aus mehreren Benzolringen, die gegebenenfalls wie vorstehend angegeben substituiert sind und die untereinander durch eine einfache Valenzbindung, eine inerte Gruppe oder einen Alkylenrest mit 1 bis 3 Kohlen- stoffatomen verbunden sind, wobei dieser aromatische Rest an verschiedenen Stellen seiner Struktur eine oder mehrere Sauerstoffbrücke(n) und/oder eine oder mehrere freie Hydroxylfunktion(en) einschließen kann, und die oder die freie(n) Valenz(en) des aromatischen Restes B durch ein Kohlenstoffatom einer aliphatischen Kette und/oder durch ein Kohlenstoffatom eines Benzolringes getragen sein kann/ können und mit einem Molverhältnis zwischen den Bismaleimidverbindungen und den Diaminverbindungen zwischen 1,1/1 und 20/1.

**2.** Verfahren gemäß Anspruch 1, dadurch gekennzeichnet, daß der Reaktant (a) genommen ist aus der Gruppe gebildet durch:

- N,N′-Metaphenylen-bismaleimid
- N,N′-Paraphenylen-bismaleimid
- N,N′-4,4′-Diphenylmethan-bismaleimid
- N,N′-4,4′-Diphenylether-bismaleimid
- N,N′-4,4′-Diphenylsulfon-bismaleimid
- N,N′-1,4-Cyclohexylen-bismaleimid
- N,N′-4,4′-1,1-Diphenylcyclohexan-bismaleimid
- N,N′-4,4′-2,2-Diphenylpropan-bismaleimid
- N,N′-4,4′-Triphenylmethan-bismaleimid
- N,N′-2-Methyl-1,3-phenylen-bismaleimid
- N,N′-4-Methyl-1,3-phenylen-bismaleimid
- N,N′-5-Methyl-1,3-phenylen-bismaleimid

und deren Gemische.

3. Verfahren gemäß einem der Ansprüche 1 und 2, dadurch gekennzeichnet, daß der Reaktant (b) genommen ist aus der Gruppe gebildet aus:
   - 4,4′-Diamino-3,3′,5,5′-tetramethyl-diphenylmethan
   - 4,4′-Diamino-3,3′,5,5′-tetraethyl-diphenylmethan
   - 4,4′-Diamino-3,5-dimethyl-3′,5′-diethyl-diphenylmethan
   - 4,4′-Diamino-3,3′-diethyl-5,5′-dimethyl-diphenylmethan
   - 4,4′-Diamino-3,3′,5,5′-tetraisopropyl-diphenylmethan
   - 4,4′-Diamino-3,3′-diisopropyl-5,5′-dimethyl-diphenylmethan
   - 4,4′-Diamino-2,2′-dichlor-3,3′,5,5′-tetraethyl-diphenylmethan
   - 1,3-Diamino-2,4-diethyl-6-methyl-benzol
   - 1,3-Dimaino-2-methyl-4,6-diethyl-benzol

   und deren Gemische.

4. Verfahren gemäß einem der Ansprüche 1 bis 3, dadurch gekennzeichnet, daß der Reaktant (e) aus einer oder mehreren Verbindung(en) besteht, gehörend zu den folgenden Typen (e1), (e2), (e3), (e4) und (e5):
   (e1) die Mono(meth)acrylate entsprechend der Formel (IV), worin
   . n = 1, und
   . B einen einwertigen organischen Rest der Formel (VI)

$$-(CH_2\ CH_2O)_m-B_1 \qquad \text{(VI)}$$

darstellt, worin: $B_1$ einen linearen oder verzweigten Alkylrest mit 1 bis 6 Kohlenstoffatomen oder einen Phenylrest bedeutet; und m eine ganze Zahl gleich Null, 1, 2, 3, 4 oder 5 ist;
   (e2) die Di(meth)acrylate entsprechend der Formel (IV), worin:
   . n = 2, und
   . B bedeutet einen zweiwertigen organischen Rest der Formel (VII)

$$-(CH_2\ CH_2O)_p-B_2-(OCH_2\ CH_2)_q- \qquad \text{(VII)}$$

worin: $B_2$ einen linearen oder verzweigten zweiwertigen Alkylenrest mit 2 bis 9 Kohlenstoffatomen darstellt, der eine oder mehrere Sauerstoffbrücke(n) enthalten kann, oder einen Rest der Formel

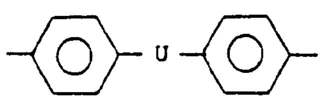

worin das Symbol U eine einfache Valenzbindung darstellt oder eine Gruppe
$-CH_2$, $-CH_2-CH_2$, $-CH(CH_3)CH_2-$,

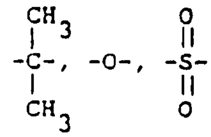

darstellt; die Symbole p und q, die identisch oder verschieden sind, bedeuten jeweils eine ganze Zahl gleich Null, 1, 2, 3, 4 oder 5;

(e3) die Tri- und Tetra(meth)acrylate entsprechend der Formel (IV), worin:

. n = 3 oder 4; und

. B bedeutet einen dreiwertigen oder vierwertigen organischen Rest, abgeleitet von einem linearen oder verzweigten gesättigten aliphatischen Rest mit 3 bis 20 Kohlenstoffatomen, der eine oder mehrere Sauerstoffbrücke(n) und/oder eine oder mehrere freie Hydroxylfunktion(en) enthalten kann;

(e4) die Novolakepoxy(meth)acrylate, welche der Formel (IV) entsprechen und hier durch die folgende Formel dargestellt sind:

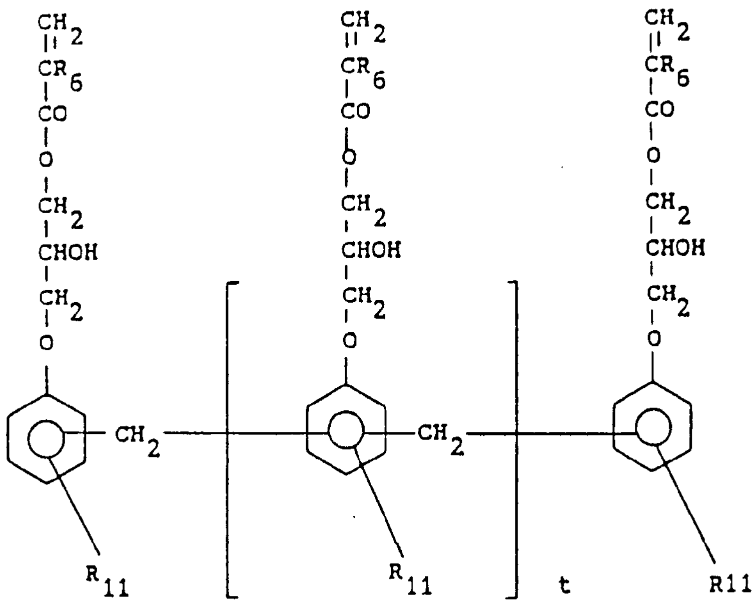

(VIII)

worin:

. das Symbol $R_6$ die vorstehend bei der Formel (IV) angegebene Bedeutung hat;

. das Symbol $R_{11}$ ein Wasserstoffatom oder einen Methylrest bedeutet;

. t eine ganze Zahl oder Bruchzahl in dem Bereich von 0,1 bis 7 ist;

(e5) Mischungen von mehreren Acrylaten und/oder Methacrylaten des gleichen Typs [(e1), (e2), (e3) oder (e4)] untereinander und Mischungen eines oder mehrerer Acrylate(s) und/oder Methacrylate(s) des gleichen Typs mit einem oder mehreren Acrylate(n) und/oder Methacrylate(n) eines anderen Typs.

**5.** Verfahren gemäß einem der Ansprüche 1 bis 4, dadurch gekennzeichnet, daß der Reaktant (c), falls er verwendet wird, in einer Menge angewandt wird, welche weniger als 60 % des Gewichts des Reaktanten (a) + (b) beträgt.

**6.** Verfahren gemäß einem der Ansprüche 1 bis 5, dadurch gekennzeichnet, daß der Reaktant (d), falls er verwendet wird, in Mengen angewandt wird, die in dem Bereich von 0,01 bis 1 Gew.-% in bezug auf die Gesamtheit der Reaktanten (a) + (b) + (e) + gegebenenfalls (c) liegt.

**7.** Verfahren gemäß einem der Ansprüche 1 bis 6, dadurch gekennzeichnet, daß der Reaktant (e) in Mengen angewandt wird, welche von 1 % bis 60 % des Gesamtgewichts der Reaktanten (a) + (b) + (e) + gegebenenfalls (c) darstellen.

## Claims

**Claims for the following Contracting States : AT, BE, CH, DE, FR GB, IT, LI, LU, NL, SE**

1. Sheet-curable prepolymers containing imide groups, exhibiting a melt viscosity measured at a temperature of +80°C ± 0.1°C of between 0.1 Pa s and 500 Pa s, which comprise the product of reaction, at a temperature ranging from 50°C to 180°C, between:
   - (a) an N,N'-bisimide or a combination of a number of bisimides of formula:

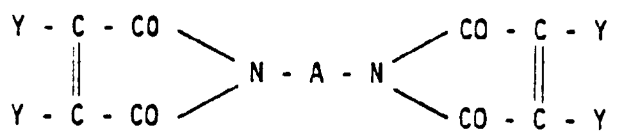

(I)

in which:

each of the symbols Y, which are identical or different, denotes H, $CH_3$ or Cl;

the symbol A denotes a divalent radical chosen from the group consisting of the following radicals: cyclohexylenes, phenylenes, 4-methyl-1,3-phenylene, 2-methyl-1,3-phenylene, 5-methyl-1,3-phenylene, 2,5-diethyl-3-methyl-1,4-phenylene and the radicals of formula:

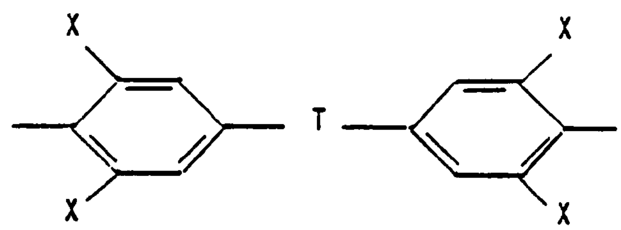

in which T denotes a single valency bond or a group:

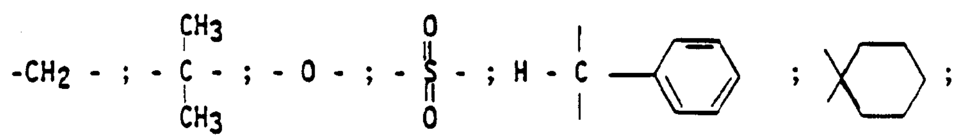

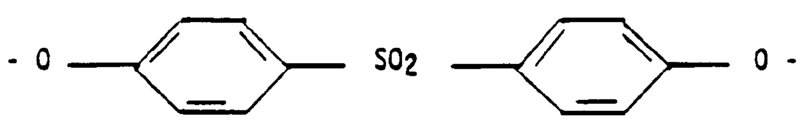

and each of the symbols X, which are identical or different, denotes a hydrogen atom or a methyl, ethyl, propyl or isopropyl radical, and
   - (b) one or a number of hindered diprimary diamine(s) taken from the group made up of:
     (i) the species corresponding to the general formula:

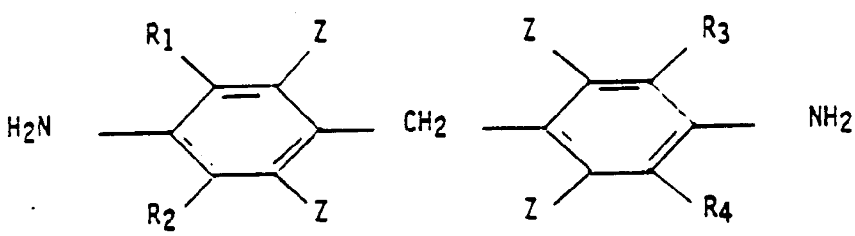

(II)

in which:

each of the symbols $R_1$, $R_2$, $R_3$ and $R_4$, which are identical or different, denotes a methyl, ethyl, propyl or isopropyl radical,

each of the symbols Z, which are identical or different, denotes a hydrogen atom or a chlorine atom,

(ii) and the species corresponding to the general formula:

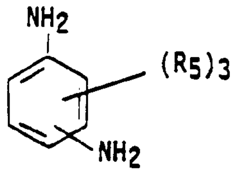

(III)

in which:

the amino radicals are in a meta or para position in relation to one another,

each of the symbols $R_5$, which are identical or different, denoting a methyl, ethyl, propyl or isopropyl radical,

the said prepolymers containing imide groups being characterized in that the reaction mixture which is used to prepare them additionally contains:

- one or more reactant(s) (c) and/or (d), (c) consisting of one or a number of substituted heterocyclic compound(s) taken from the group made up of: vinylpyridines, N-vinyl-2-pyrrolidone, allyl isocyanurate, vinyltetrahydrofuran, (d) consisting of an imidazole compound,
- and an acrylate reactant (e) consisting of one or more compound(s) of general formula:

$$(CH_2{=}CR_6{-}CO{-}O\text{—})_n\text{—}B \qquad (IV)$$

in which:

the symbol $R_6$ denotes a hydrogen atom or a methyl radical,

n denotes a whole or fractional number equal to at least 1 and equal at most to 8,

the symbol B denotes an organic radical of valency n derived: from a saturated, linear or branched aliphatic residue containing from 1 to 30 carbon atoms and capable of containing one or more oxygen bridge(s) and/or one or a number of free hydroxyl functional group(s), from an aromatic residue (of aryl or aryl aliphatic type) containing from 6 to 150 carbon atoms, consisting of a benzene nucleus which may be substituted by one to three alkyl radicals containing from 1 to 5 carbon atoms or of a number of benzene nuclei optionally substituted as indicated above, linked together by a single valency bond, an inert group or an alkylene radical containing from 1 to 3 carbon atoms, it being possible for the said aromatic residue to contain at various places in its structure one or more oxygen bridge(s) and/or one or a number of free hydroxyl functional group(s), it being possible for the free valency (valencies) of the aromatic radical B to be carried by a carbon atom of an aliphatic chain and/or by a carbon atom of a benzene nucleus,

the molar ratio of the bismaleimide compounds in relation to the diamine compounds being between 20/1 and 1.1/1.

2. Prepolymers according to Claim 1,
characterised in that the reactant (a) is taken from the group made up of:
- N,N′-meta-phenylenebismaleimide,
- N,N′-para-phenylenebismaleimide,
- N,N′-4,4′-diphenylmethanebismaleimide,
- N,N′-4,4′-diphenyl ether bismaleimide,
- N,N′-4,4′-diphenyl sulphone bismaleimide,
- N,N′-1,4-cyclohexylenebismaleimide,
- N,N′-4,4′-(1,1-diphenylcyclohexane)bismaleimide,
- N,N′-4,4′-(2,2-diphenylpropane)bismaleimide,
- N,N′-4,4′-triphenylmethanebismaleimide,
- N,N′-2-methyl-1,3-phenylenebismaleimide,
- N,N′-4-methyl-1,3-phenylenebismaleimide,
- N,N′-5-methyl-1,3-phenylenebismaleimide,

- and mixtures thereof.

**3.** Prepolymers according to either of Claims 1 and 2, characterised in that the reactant (b) is taken from the group made up of:
- 4,4′-diamino-3,3′,5,5′-tetramethyldiphenylmethane,
- 4,4′-diamino-3,3′-5,5′-tetraethyldiphenylmethane,
- 4,4′-diamino-3,5-dimethyl-3′,5′-diethyldiphenylmethane,
- 4,4′-diamino-3,3′-diethyl-5,5′-dimethyldiphenylmethane,
- 4,4′-diamino-3,3′,5,5′-tetraisopropyldiphenylmethane,
- 4,4′-diamino-3,3′-diisopropyl-5,5′-dimethyldiphenylmethane,
- 4,4′-diamino-2,2′-dichloro-3,3′,5,5′-tetraethyldiphenylmethane,
- 1,3-diamino-2,4-diethyl-6-methylbenzene,
- 1,3-diamino-2-methyl-4,6-diethylbenzene,
- and mixtures thereof.

**4.** Prepolymers according to any one of Claims 1 to 3, characterised in that the reactant (e) consists of one or more compound(s) belonging to the following types (e1), (e2), (e3), (e4) and (e5):

(e1) the mono(meth)acrylates corresponding to the formula (IV) in which:

n = 1, and

B denotes a monovalent organic radical of formula:

$$-(CH_2CH_2O)_m-B_1 \qquad (VI)$$

in which: $B_1$ denotes a linear or branched alkyl radical containing from 1 to 6 carbon atoms or a phenyl radical, and m is an integer equal to zero, 1, 2, 3, 4 or 5;

(e2) the di(meth)acrylates corresponding to the formula (IV) in which:

n = 2, and

B denotes a divalent organic radical of formula:

$$-(CH_2CH_2O)_p-B_2-(OCH_2CH_2)_q- \qquad (VII)$$

in which: $B_2$ denotes a linear or branched alkylene divalent radical containing from 2 to 9 carbon atoms and capable of containing one or more oxygen bridge(s) or a radical of formula

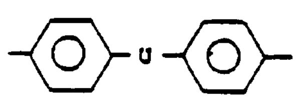

in which the symbol U denotes a single valency bond or a group:

$-CH_2-$, $-CH_2-CH_2-$, $-CH(CH_3)CH_2-$, 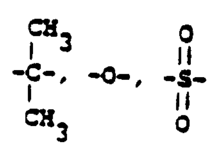 ;

and each of the symbols p and q, which are identical or different, denotes an integer equal to zero, 1, 2, 3, 4 or 5;

(e3) the tri- and tetra(meth)acrylates corresponding to the formula (IV) in which:

n = 3 or 4, and

B denotes a trivalent or tetravalent organic radical derived from a linear or branched saturated aliphatic residue containing from 3 to 20 carbon atoms and capable of containing one or more oxygen bridge(s) and/or one or a number of free hydroxyl functional groups,

(e4) novolac epoxy (meth)acrylate which, while corresponding to the formula (IV), are here denoted

by the following formula:

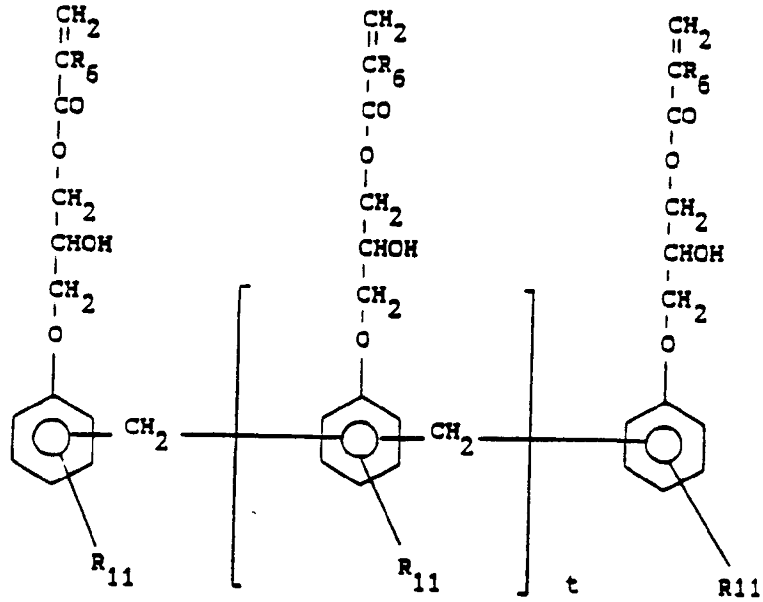

(VIII)

in which:

the symbol $R_6$ has the meaning given above with regard to formula (IV),

the symbol $R_{11}$ denotes a hydrogen atom or a methyl radical,

t is a whole or fractional number lying in the range from 0.1 to 7,

(e5) mixtures of a number of acrylates and/or methacrylates of the same type (e1), (e2), (e3) or (e4) with each other or mixtures of one or more acrylate(s) and/or methacrylate(s) of the same type with one or more acrylate(s) and/or methacrylate(s) of another type.

5. Prepolymers according to any one of Claims 1 to 4, characterised in that the reactant (c), when used, is employed in a quantity representing less than 60 % of the weight of the reactant (a) + (b).

6. Prepolymers according to any one of Claims 1 to 5, characterised in that the reactant (d), when used, is employed in quantities lying in the range from 0.01 to 1 % by weight relative to the total of the reactants (a) + (b) + (e) + optionally (c).

7. Prepolymers according to any one of Claims 1 to 6, characterised in that the reactant (e) is employed in quantities representing from 1 % to 60 % of the total weight of the reactants (a) + (b) + (e) + optionally (c).

8. Process for the preparation of prepolymers according to any one of Claims 1 to 7, characterised in that the following stages are linked into a sequence:

- stage 1: the mixture (a) + (b) is melted, the operation being carried out with stirring and at a temperature between 50°C and 180°C, the molar ratio of compounds (a) in relation to the compounds (b) being between 20/1 and 1.1/1,
- then, stage 2, the reactant(s) (c) and/or (d) is (are) added to the molten mixture which is stirred and kept at a temperature which is identical or different from that used in the preceding stage, of between 50°C and 180°C, and the reaction mixture is allowed to react with stirring for a period ranging from 1 minute to 20 minutes,
- and, stage 3, at the end of this time, the reactant (e) is introduced rapidly into the reaction mixture, continuously stirred and kept at the temperature of the preceding stage of addition of the reactant(s) (c) and/or (d), and, once this reactant has been introduced, the prepolymer formed is immediately poured outside the reactor which has been used to prepare it.

9. Application of the prepolymers according to any one of Claims 1 to 7 to the manufacture of articles by the filament winding technique and to the production of preimpregnated intermediate articles by employing the technique of solvent-free impregnation of various fibrous materials.

**Claims for the following Contracting State : ES**

1. Process for the preparation of heat-curable prepolymers containing imide groups, exhibiting a melt viscosity measured at a temperature of 80°C ± 0.1°C of between 0.1 Pa s and 500 Pa s, characterised in that the following stages are linked into a sequence:
Stage 1: the mixture of reactants (a) + (b) defined below is melted, the operation being carried out with stirring and at a temperature of between 50°C and 180°C:
- (a) being an N,N'-bisimide or a combination of a number of bisimides of formula:

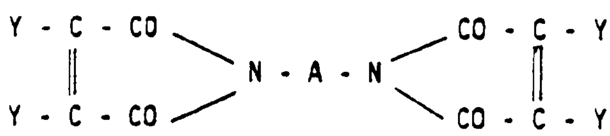

(I)

in which:

each of the symbols Y, which are identical or different, denotes H, $CH_3$ or Cl;

the symbol A denotes a divalent radical chosen from the group consisting of the following radicals: cyclohexylenes, phenylenes, 4-methyl-1,3-phenylene, 2-methyl-1,3-phenylene, 5-methyl-1,3-phenylene, 2,5-diethyl-3-methyl-1,4-phenylene and the radicals of formula:

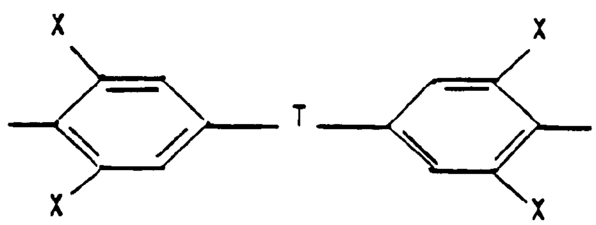

in which T denotes a single valency bond or a group:

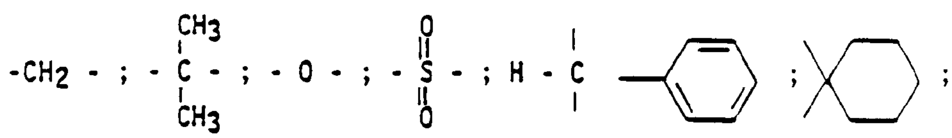

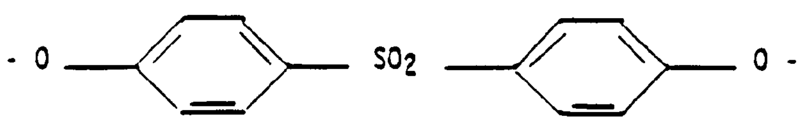

and each of the symbols X, which are identical or different, denotes a hydrogen atom or a methyl, ethyl, propyl or isopropyl radical, and
- (b) being one or a number of hindered diprimary diamine(s) taken from the group made up of:
(i) the species corresponding to the general formula:

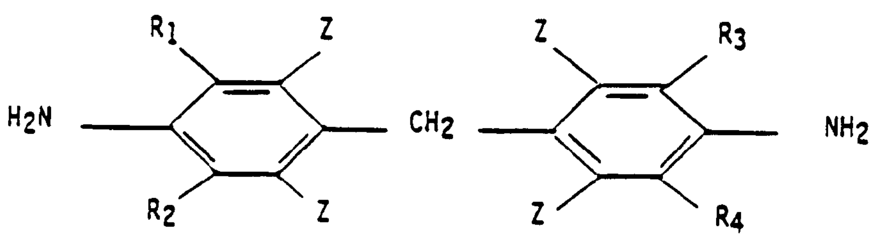

(II)

in which:

each of the symbols $R_1$, $R_2$, $R_3$ and $R_4$, which are identical or different, denotes a methyl, ethyl,

propyl or isopropyl radical,

each of the symbols Z, which are identical or different, denotes a hydrogen atom or a chlorine atom,

(ii) and the species corresponding to the general formula:

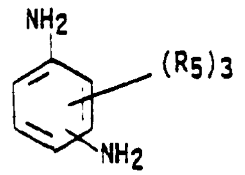

(III)

in which:

the amino radicals are in a meta or para position in relation to one another,

each of the symbols $R_5$, which are identical or different, denoting a methyl, ethyl, propyl or isopropyl radical,

then, stage 2: the reactant(s) (c) and/or (d) defined below is (are) added to the molten mixture which is stirred and kept at a temperature which is identical or different from that used in the preceding stage, of between 50°C and 180°C:

- (c) consisting of one or a number of substituted heterocyclic compound(s) taken from the group made up of: vinylpyridines, N-vinyl-2-pyrrolidone, allyl isocyanurate, vinyltetrahydrofuran and
- (d) consisting of an imidazole compound, and the reaction mixture is allowed to react with stirring for a period ranging from 1 minute to 20 minutes;

and, stage 3: at the end of this time the reactant (e) defined below is introduced rapidly into the reaction mixture, continuously stirred and kept at the temperature of the preceding stage of addition of the reactant(s) (c) and/or (d), and, once this reactant has been introduced, the prepolymer formed is immediately poured outside the reactor which has been used to prepare it:

- (e) being an acrylate reactant which consists of one or more compound(s) of general formula:

$$(CH_2{=}CR_6{-}CO{-}O{-})_n{-}B \qquad (IV)$$

in which:

the symbol $R_6$ denotes a hydrogen atom or a methyl radical,

n denotes a whole or fractional number equal to at least 1 and equal at most to 8,

the symbol B denotes an organic radical of valency n derived: from a saturated, linear or branched aliphatic residue containing from 1 to 30 carbon atoms and capable of containing one or more oxygen bridge(s) and/or one or a number of free hydroxyl functional group(s), from an aromatic residue (of aryl or arylaliphatic type) containing from 6 to 150 carbon atoms, consisting of a benzene nucleus which may be substituted by one to three alkyl radicals containing from 1 to 5 carbon atoms or of a number of benzene nuclei optionally substituted as indicated above, linked together by a single valency bond, an inert group or an alkylene radical containing from 1 to 3 carbon atoms, it being possible for the said aromatic residue to contain at various places in its structure one or more oxygen bridge(s) and/or one or a number of free hydroxyl functional group(s), it being possible for the free valency (valencies) of the aromatic radical B to be carried by a carbon atom of an aliphatic chain and/or by a carbon atom of a benzene nucleus, and the molar ratio of the bismaleimide compounds to the diamine compounds being between 1.1/1 and 20/1.

2. Process according to Claim 1, characterised in that the reactant (a) is taken from the group made up of:
   - N,N′-meta-phenylenebismaleimide,
   - N,N′-para-phenylenebismaleimide,
   - N,N′-4,4′-diphenylmethanebismaleimide,
   - N,N′-4,4′-diphenyl ether bismaleimide,
   - N,N′-4,4′-diphenyl sulphone bismaleimide,
   - N,N′-1,4-cyclohexylenebismaleimide,
   - N,N′-4,4′-(1,1-diphenylcyclohexane)bismaleimide,
   - N,N′-4,4′-(2,2-diphenylpropane)bismaleimide,
   - N,N′-4,4′-triphenylmethanebismaleimide,
   - N,N′-2-methyl-1,3-phenylenebismaleimide,

- N,N′-4-methyl-1,3-phenylenebismaleimide,
- N,N′-5-methyl-1,3-phenylenebismaleimide,
- and mixtures thereof.

**3.** Process according to either of Claims 1 and 2, characterised in that the reactant (b) is taken from the group made up of:
- 4,4′-diamino-3,3′,5,5′-tetramethyldiphenylmethane,
- 4,4′-diamino-3,3′-5,5′-tetraethyldiphenylmethane,
- 4,4′-diamino-3,5-dimethyl-3′,5′-diethyldiphenylmethane,
- 4,4′-diamino-3,3′-diethyl-5,5′-dimethyldiphenylmethane,
- 4,4′-diamino-3,3′,5,5′-tetraisopropyldiphenylmethane,
- 4,4′-diamino-3,3′-diisopropyl-5,5′-dimethyldiphenylmethane,
- 4,4′-diamino-2,2′-dichloro-3,3′,5,5′-tetraethyldiphenylmethane,
- 1,3-diamino-2,4-diethyl-6-methylbenzene,
- 1,3-diamino-2-methyl-4,6-diethylbenzene,
- and mixtures thereof.

**4.** Process according to any one of Claims 1 to 3, characterised in that the reactant (e) consists of one or more compound(s) belonging to the following types (e1), (e2), (e3), (e4) and (e5):

(e1) the mono(meth)acrylates corresponding to the formula (IV) in which:

n = 1, and

B denotes a monovalent organic radical of formula:

$$-(CH_2CH_2O)_m-B_1 \qquad (VI)$$

in which: $B_1$ denotes a linear or branched alkyl radical containing from 1 to 6 carbon atoms or a phenyl radical, and m is an integer equal to zero, 1, 2, 3, 4 or 5;

(e2) the di(meth)acrylates corresponding to the formula (IV) in which:

n = 2, and

B denotes a divalent organic radical of formula:

$$-(CH_2CH_2O)_p-B_2-(OCH_2CH_2)_q- \qquad (VII)$$

in which: $B_2$ denotes a linear or branched alkylene divalent radical containing from 2 to 9 carbon atoms and capable of containing one or more oxygen bridge(s) or a radical of formula

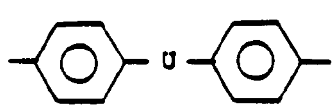

in which the symbol U denotes a single valency bond or a group:

$-CH_2-$, $-CH_2-CH_2$, $-CH(CH_3)CH_2-$,

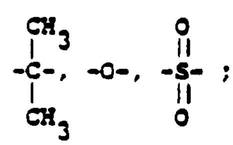

and each of the symbols p and q, which are identical or different, denotes an integer equal to zero, 1, 2, 3, 4 or 5;

(e3) the tri- and tetra(meth)acrylates corresponding to the formula (IV) in which:

n = 3 or 4, and

B denotes a trivalent or tetravalent organic radical derived from a linear or branched saturated aliphatic residue containing from 3 to 20 carbon atoms and capable of containing one or more oxygen bridge(s) and/or one or a number of free hydroxyl functional group(s),

(e4) novolac epoxy (meth)acrylate which, while corresponding to the formula (IV), are here denoted by the following formula:

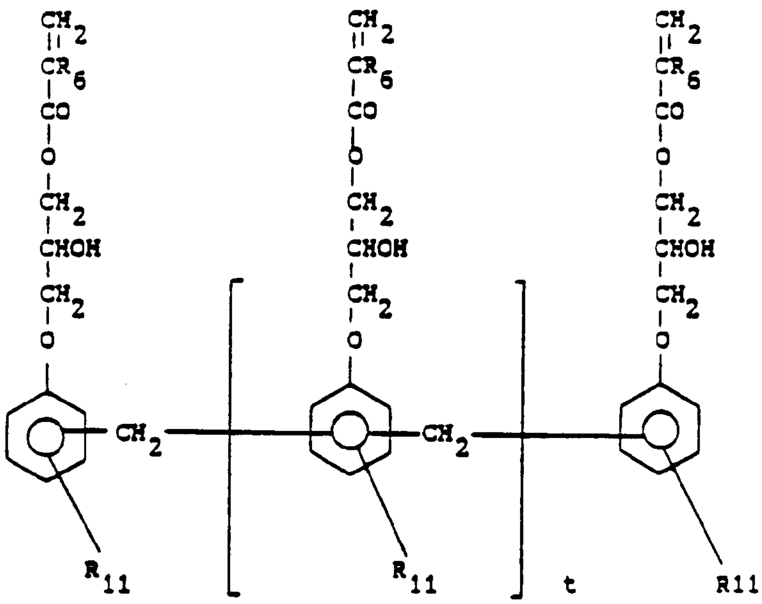

(VIII)

in which :

the symbol $R_6$ has the meaning given above with regard to formula (IV),

the symbol $R_{11}$ denotes a hydrogen atom or a methyl radical,

t is a whole or fractional number lying in the range from 0.1 to 7,

(e5) mixtures of a number of acrylates and/or methacrylates of the same type [(e1), (e2), (e3) or (e4)] with each other or mixtures of one or more acrylate(s) and/or methacrylate(s) of the same type with one or more acrylate(s) and/or methacrylate(s) of another type.

**5.** Process according to any one of Claims 1 to 4, characterised in that the reactant (c), when used, is employed in a quantity representing less than 60 % of the weight of the reactant (a) + (b).

**6.** Process according to any one of Claims 1 to 5, characterised in that the reactant (d), when used, is employed in quantities lying in the range from 0.01 to 1 % by weight relative to the total of the reactants (a) + (b) + (e) + optionally (c).

**7.** Process according to any one of Claims 1 to 6, characterised in that the reactant (e) is employed in quantities representing from 1 % to 60 % of the total weight of the reactants (a) + (b) + (e) + optionally (c).